(19) Europäisches Patentamt / European Patent Office / Office européen des brevets

(11) **EP 4 079 491 B1**

(12) **EUROPEAN PATENT SPECIFICATION**

(45) Date of publication and mention
of the grant of the patent:
**23.07.2025 Bulletin 2025/30**

(21) Application number: **20903490.9**

(22) Date of filing: **16.12.2020**

(51) International Patent Classification (IPC):
**B29C 55/14** *(2006.01)*    **B29K 67/00** *(2006.01)*
**B29L 7/00** *(2006.01)*    **C08J 5/18** *(2006.01)*
**B29C 48/08** *(2019.01)*

(52) Cooperative Patent Classification (CPC):
**B29C 55/14; B29C 48/0018; B29C 48/08;
B29C 48/21; B29C 55/143; B29D 7/01;
B32B 27/08; B32B 27/36; C08J 5/18;**
B29K 2067/00; B29K 2995/0017; B29K 2995/0089;
B29L 2007/008; B29L 2009/00; B32B 2250/244;
(Cont.)

(86) International application number:
**PCT/JP2020/047015**

(87) International publication number:
**WO 2021/125236 (24.06.2021 Gazette 2021/25)**

(54) **BIAXIALLY ORIENTED POLYESTER FILM AND METHOD FOR PRODUCING SAME**

BIAXIAL ORIENTIERTE POLYESTERFOLIE UND VERFAHREN ZUR HERSTELLUNG DAVON

FILM DE POLYESTER À ORIENTATION BIAXIALE ET PROCÉDÉ POUR SA FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2019 JP 2019229923**

(43) Date of publication of application:
**26.10.2022 Bulletin 2022/43**

(73) Proprietor: **TOYOBO CO., LTD.**
**Osaka-shi, Osaka 530-8230 (JP)**

(72) Inventors:
• **SHIMIZU, Toshiyuki**
**Osaka-shi, Osaka 530-8230 (JP)**
• **HAYAKAWA, Shota**
**Otsu-shi, Shiga 520-0292 (JP)**
• **KAWAGUCHI, Kenta**
**Otsu-shi, Shiga 520-0292 (JP)**
• **HIGASHIURA, Shinya**
**Otsu-shi, Shiga 520-0292 (JP)**

(74) Representative: **Vossius & Partner**
**Patentanwälte Rechtsanwälte mbB**
**Siebertstraße 3**
**81675 München (DE)**

(56) References cited:
DE-A1- 2 443 928      JP-A- 2002 086 556
JP-A- 2019 172 812    JP-A- H10 249 933
US-B1- 6 368 532

(52) Cooperative Patent Classification (CPC): (Cont.)
B32B 2307/518; B32B 2307/558; B32B 2307/736;
C08J 2367/02; C08J 2367/04

# EP 4 079 491 B1

## Description

### TECHNICAL FIELD

The present invention relates to a method for producing biaxially oriented polyester film. More specifically, it relates to a method for producing biaxially oriented polyester film having excellent flexibility and formability and also having excellent heat resistance.

### BACKGROUND ART

Films comprising polyester with excellent crystallinity as typified by polyethylene terephthalate resin have excellent mechanical properties, heat resistance, and so forth, and have found use in myriad applications.

For example, these are employed in a wide variety of applications which include packaging applications, electrical insulation applications, optical applications, magnetic recording applications, and mold release substrate applications.

But while biaxially oriented films comprising polyester with excellent crystallinity as typified by polyethylene terephthalate resin have excellent heat resistance, the impact strength thereof has not been satisfactory.

In this regard, while biaxially oriented polyester films in which the primary constituent thereof is a polyester resin having low crystallinity such as an aliphatic polyester or a polyethylene terephthalate resin which is copolymerized with isophthalic acid have excellent impact strength, they have had inferior heat resistance.

As methods for reducing thermal shrinkage at high temperature of biaxially stretched film comprising polyethylene terephthalate resin, while methods such as those in which the temperature during transverse stretching is made to be sufficiently higher than the crystallization temperature, being a temperature extremely close to the heat setting temperature that follows, have been proposed (see, for example, Patent Reference No. 1), the impact strength thereof has been inadequate.

Patent Reference No. 2 discloses a heat sealable, thermal shrinkable biaxially oriented polyester film and a method for its production.

### PRIOR ART REFERENCES

### PATENT REFERENCES

Patent Reference No. 1: Japanese Patent Application Publication Kokai No. 2017-74750
Patent Reference No. 2: DE2443928 A1

### SUMMARY OF THE INVENTION

### PROBLEM TO BE SOLVED BY INVENTION

It is an object of the present invention to solve the foregoing problems and provide a biaxially oriented polyester film having excellent impact strength and heat resistance and a method for producing same.

More specifically, it is to provide a biaxially stretched polyester film which is such that pinholes and ripping tend not to occur when the film is subjected to bending and/or impact and which is such that there is little change in dimensions when the film undergoes operations during which it is heated such as is the case with printing treatment and so forth as well as a method for producing same in stable fashion and at low cost.

### MEANS FOR SOLVING PROBLEM

As a result of intensive research with the goal of achieving such objects, the present inventor(s) discovered that, when manufacturing a biaxially oriented polyester film comprising a layer containing a composition comprising polyester resin having a particular crystallization temperature, it was possible, by causing an unstretched sheet containing the foregoing polyester resin composition to be stretched in the machine direction and the transverse direction at particular stretching ratios within particular temperature ranges, to obtain a biaxially oriented film having excellent impact strength and heat resistance.

Moreover, use of a composition comprising polyester resin having a particular crystallization temperature will also make it possible to attain a biaxially oriented polyester film that is flexible and that has excellent formability. Besides general-purpose packaging, this film may be favorably used in such applications as exterior covering material for secondary batteries, labels, and so forth.

The present invention is constituted as follows.

[1] A method for producing biaxially stretched polyester film comprising Operation A through Operation D, below. Tc refers to crystallization temperature when heated (° C), Tg refers to glass transition temperature (° C), and Tm refers to melting point (° C).

Operation A: Operation in which composition comprising polyester resin for which Tc - (Tg + Tm)/2 is not less than -25° C but not greater than 35° C is melt extruded to obtain unstretched polyester resin composition sheet.

Operation B: Operation in which the unstretched polyester resin composition sheet obtained at Operation A is heated so as to be within the range not less than Tg + 5 (° C) of the polyester resin but not greater than Tg + 40 (° C) of the polyester resin, and this is stretched so that the stretching ratio in the machine direction is within the range not less than 2x but not greater than 6x to obtain uniaxially oriented polyester resin composition film.

Operation C: Operation in which the uniaxially oriented polyester resin composition film obtained at Operation B is heated so as to be within the range not less than Tc - 46 (° C) of the polyester resin but not greater than Tc + 25 (° C) of the polyester resin, and this is stretched so that the stretching ratio in the transverse direction is within the range not less than 4x but not greater than 8x to obtain biaxially oriented polyester resin composition film.

Operation D: Operation in which the biaxially oriented polyester resin composition film obtained at Operation C is made to undergo relaxation within the range not less than 3% but not greater than 20% in the transverse direction of the film as it is heated so as to be within the range not less than Tm - 40 (° C) of the polyester resin but not greater than Tm - 5 (° C) of the polyester resin.

[2] A method for producing biaxially stretched polyester film comprising Operation A through Operation D, below. Tc refers to crystallization temperature when heated (° C), Tg refers to glass transition temperature (° C), and Tm refers to melting point (° C).

Operation A: Operation in which a layer containing composition comprising polyester resin for which Tc - (Tg + Tm)/2 is not less than -25° C but not greater than 35° C, and a layer containing polyester resin composition, are melt coextruded to obtain unstretched polyester resin composition sheet.

Operation B: Operation in which the unstretched polyester resin composition sheet obtained at Operation A is heated so as to be within the range not less than Tg + 5 (° C) of the polyester resin but not greater than Tg + 40 (° C) of the polyester resin, and this is stretched so that the stretching ratio in the machine direction is within the range not less than 2x but not greater than 6x to obtain uniaxially oriented polyester resin composition film.

Operation C: Operation in which the uniaxially oriented polyester resin composition film obtained at Operation B is heated so as to be within the range not less than Tc - 46 (° C) of the polyester resin but not greater than Tc + 25 (° C) of the polyester resin, and this is stretched so that the stretching ratio in the transverse direction is within the range not less than 4x but not greater than 8x to obtain biaxially oriented polyester resin composition film.

Operation D: Operation in which the biaxially oriented polyester resin composition film obtained at Operation C is made to undergo relaxation within the range not less than 3% but not greater than 20% in the transverse direction of the film as it is heated so as to be within the range not less than Tm - 40 (° C) of the polyester resin but not greater than Tm - 5 (° C) of the polyester resin.

[3] A biaxially oriented polyester film satisfying (1) through (3), below, and containing a composition comprising polyester resin for which Tc - (Tg + Tm)/2 is not less than -25° C but not greater than 35° C. Tc refers to crystallization temperature when heated (° C), Tg refers to glass transition temperature (° C), and Tm refers to melting point (° C).

(1) Maximum value of thermal shrinkage stress in machine direction when at or above Tg (° C) of polyester resin is not less than 0.1 MPa but not greater than 4.0 MPa.

(2) Thermal shrinkage in machine direction when treated for 30 minutes at 150° C is not less than 0.1% but not greater than 3.0%.

(3) Impact strength is not less than 0.5 J/12 $\mu$m but not greater than 1.0 J/12 $\mu$m.

[4] A biaxially oriented polyester film satisfying (1) through (3), below, and comprising a layer containing a composition comprising polyester resin for which Tc - (Tg + Tm)/2 is not less than -25° C but not greater than 35° C, and a layer containing polyester resin composition. Tc refers to crystallization temperature when heated (° C), Tg refers to glass transition temperature (° C), and Tm refers to melting point (° C).

(1) Maximum value of thermal shrinkage stress in machine direction when at or above Tg (° C) of polyester resin is not less than 0.1 MPa but not greater than 4.0 MPa.
(2) Thermal shrinkage in machine direction when treated for 30 minutes at 150° C is not less than 0.1% but not greater than 3.0%.
(3) Impact strength is not less than 0.5 J/12 $\mu$m but not greater than 1.0 J/12 $\mu$m.

[5] A method for producing biaxially oriented polyester film satisfying (1) through (3), below, and comprising Operation A through Operation D, below.
Tc refers to crystallization temperature when heated (° C), Tg refers to glass transition temperature (° C), and Tm refers to melting point (° C).

(1) Maximum value of thermal shrinkage stress in machine direction when at or above Tg (° C) of polyester resin is not less than 0.1 MPa but not greater than 4.0 MPa.
(2) Thermal shrinkage in machine direction when treated for 30 minutes at 150° C is not less than 0.1% but not greater than 3.0%.
(3) Impact strength is not less than 0.5 J/12 $\mu$m but not greater than 1.0 J/12 $\mu$m.

Operation A: Operation in which composition comprising polyester resin for which Tc - (Tg + Tm)/2 is not less than -25° C but not greater than 35° C is melt extruded to obtain unstretched polyester resin composition sheet.
Operation B: Operation in which the unstretched polyester resin composition sheet obtained at Operation A is heated so as to be within the range not less than Tg + 5 (° C) of the polyester resin but not greater than Tg + 40 (° C) of the polyester resin, and this is stretched so that the stretching ratio in the machine direction is within the range not less than 2x but not greater than 6x to obtain uniaxially oriented polyester resin composition film.
Operation C: Operation in which the uniaxially oriented polyester resin composition film obtained at Operation B is heated so as to be within the range not less than Tc - 46 (° C) of the polyester resin but not greater than Tc + 25 (° C) of the polyester resin, and this is stretched so that the stretching ratio in the transverse direction is within the range not less than 4x but not greater than 8x to obtain biaxially oriented polyester resin composition film.
Operation D: Operation in which the biaxially oriented polyester resin composition film obtained at Operation C is made to undergo relaxation within the range not less than 3% but not greater than 20% in the transverse direction of the film as it is heated so as to be within the range not less than Tm - 40 (° C) of the polyester resin but not greater than Tm (° C) of the polyester resin.

[6] A method for producing biaxially oriented polyester film satisfying (1) through (3), below, and comprising Operation A through Operation D, below.
Tc refers to crystallization temperature when heated (° C), Tg refers to glass transition temperature (° C), and Tm refers to melting point (° C).

(1) Maximum value of thermal shrinkage stress in machine direction when at or above Tg (° C) of polyester resin is not less than 0.1 MPa but not greater than 4.0 MPa.
(2) Thermal shrinkage in machine direction when treated for 30 minutes at 150° C is not less than 0.1% but not greater than 3.0%.
(3) Impact strength is not less than 0.5 J/12 $\mu$m but not greater than 1.0 J/12 $\mu$m.

Operation A: Operation in which a layer containing composition comprising polyester resin for which Tc - (Tg + Tm)/2 is not less than -25° C but not greater than 35° C, and a layer containing polyester resin composition, are melt coextruded to obtain unstretched polyester resin composition sheet.
Operation B: Operation in which the unstretched polyester resin composition sheet obtained at Operation A is heated so as to be within the range not less than Tg + 5 (° C) of the polyester resin but not greater than Tg + 40 (° C) of the polyester resin, and this is stretched so that the stretching ratio in the machine direction is within the range not less than 2x but not greater than 6x to obtain uniaxially oriented polyester resin composition film.
Operation C: Operation in which the uniaxially oriented polyester resin composition film obtained at Operation B is heated so as to be within the range not less than Tc - 46 (° C) of the polyester resin but not greater than Tc + 25 (° C) of the polyester resin, and this is stretched so that the stretching ratio in the transverse direction is within the range not less than 4x but not greater than 8x to obtain biaxially oriented polyester resin composition film.

Operation D: Operation in which the biaxially oriented polyester resin composition film obtained at Operation C is made to undergo relaxation within the range not less than 3% but not greater than 20% in the transverse direction of the film as it is heated so as to be within the range not less than Tm - 40 (° C) of the polyester resin but not greater than Tm (° C) of the polyester resin.

EFFECT OF THE INVENTION

Biaxially stretched polyester film in accordance with the present invention has excellent impact strength and heat resistance. For this reason, to make the most of the mechanical strength thereof, it may be employed in packaging applications and optical applications; and in particular, because it is capable of being subjected to high-temperature postprocessing treatment, it may be favorably employed in applications where stable thermal dimensional stability at high temperatures is sought.

EMBODIMENTS FOR CARRYING OUT THE INVENTION

In accordance with the present invention, use of polyester resin for which Tc - (Tg + Tm)/2 is not less than -25° C but not greater than 35° C is preferred. This will make it possible to improve impact strength. From the standpoint of impact strength, it is more preferred that Tc - (Tg + Tm)/2 be not less than -10° C but not greater than 30° C, still more preferred that this be not less than 0° C but not greater than 30° C, and particularly preferred that this be not less than 5° C but not greater than 25° C.

Whereas when Tc - (Tg + Tm)/2 is not less than -25° C but not greater than 35° C the crystallization rate of the polyester resin will be low and the properties thereof will be such that it will have excellent impact resistance due to the flexible amorphous components thereof, with a method in which control is carried out so as to cause Tc - (Tg + Tm)/2 of the polyester resin to fall within a range not less than -25° C but not greater than 30° C, a polyester resin not comprising a stiff structure, e.g., one having monomer in the form of an aromatic dicarboxylic acid having a bent structure, a flexible aliphatic dicarboxylic acid, a three-dimensionally large glycol, a flexible aliphatic monocarboxylic acid monool, or the like, will be effective.

One specific example of a polyester resin that may be used in accordance with the present invention might be a polyester resin which has ethylene glycol and terephthalic acid as primary constituents and which as dicarboxylic acid component other than terephthalic acid is copolymerized with monomer in the form of at least one species selected from the among the group consisting of isophthalic acid, p-β-oxyethoxybenzoic acid, 2,6-naphthalenedicarboxylic acid, 4,4'-dicarboxybenzophenone, bis-(4-(carboxyphenylethane), adipic acid, sebacic acid, glutaric acid, succinic acid, 2,5-furandicarboxylic acid, 5-sodiosulfo isophthalic acid, and cyclohexane-1,4-dicarboxylic acid. It is preferred that that these be present in an amount that is not less than 3 mol% but not greater than 30 mol%, and more preferred that this be not less than 5 mol% but not greater than 15 mol%, isophthalic acid, adipic acid, sebacic acid, glutaric acid, and 2,5-furandicarboxylic acid being more preferred as monomer.

Or it might be a polyester resin which as glycol component other than ethylene glycol is copolymerized with monomer in the form of at least one species selected from the among the group consisting of propylene glycol, butanediol, neopentyl glycol, diethylene glycol, cyclohexanedimethanol, ethylene oxide adduct of bisphenol A or the like, polyethylene glycol, polypropylene glycol, and polytetramethylene glycol. It is preferred that that these be present in an amount that is not less than 3 mol% but not greater than 30 mol%, and more preferred that this be not less than 5 mol% but not greater than 15 mol%, neopentyl glycol and diethylene glycol being more preferred as monomer.

Polyester resin employed in accordance with the present invention is such that glycol component other than ethylene glycol and dicarboxylic acid component other than terephthalic acid may be used in combination.

Another specific example of a polyester resin that may be used in accordance with the present invention might be a polyester having crystallinity when by itself and which comprises a bent dicarboxylic acid and ethylene glycol.

Furthermore, as raw materials which may be employed, besides those derived from fossil fuels, it is preferred that those derived from plants or those which may be obtained by chemical recycling or the like be employed. As raw materials derived from plants, bioethylene glycol, biopropylene glycol, biobutane diol, bioadipic acid, biosebacic acid, bioglutaric acid, bioterephthalic acid, biofurandicarboxylic acid, and so forth may be cited. As raw materials which may be obtained by chemical recycling, recycled terephthalic acid, recycled isophthalic acid, recycled naphthalenedicarboxylic acid, recycled furandicarboxylic acid, and so forth may be cited.

There is no particular limitation with respect to the method for producing such polyester resins. That is, those produced by either the transesterification method or by the direct polymerization method may be employed. Furthermore, to increase molecular weight, there is no objection to those produced by solid-state polymerization for the purpose of reducing oligomer content.

It is preferred that intrinsic viscosity of such polyester resins be in the range 0.57 dl/g to 1.0 dl/g, and more preferred that this be in the range 0.60 dl/g to 0.90 dl/g.

When intrinsic viscosity of the polyester resin is less than 0.57 dl/g, there will be increased tendency for the film to tear. Furthermore, because reduction in the intrinsic viscosity of the polyester resin will cause increase in the crystallization temperature of the polyester resin, this will be advantageous for improving the heat resistance of the biaxially oriented polyester film that is obtained. When intrinsic viscosity of the polyester resin is greater than 1.0 dl/g, this will result in increased resin pressure during the extruding operation, making extrusion difficult. Furthermore, because increase in the intrinsic viscosity of the polyester resin will cause decrease in the crystallization temperature of the polyester resin, this will be advantageous for improving the impact strength of the biaxially oriented polyester film that is obtained.

Another specific example of a polyester resin that may be used in accordance with the present invention might be a crystalline polylactic acid resin which is an aliphatic polyester. Crystalline polylactic acid resin may be obtained by using a compound having a hydroxyl group as initiator in the presence of a known catalyst to carry out ring-opening polymerization of a lactide, it being preferred that the lactide employed be one of high optical purity; i.e., one for which the ratio of L-lactide (hereinafter "L enantiomer")/D-lactide (hereinafter "D enantiomer") is 100/0 to 85/15 (wt%) or 15/85 to 0/100 (wt%). Because when the fractional amount of the L enantiomer is not less than 85 wt% or not greater than 15 wt% it will be the case not only that crystallinity will be adequate but that melting point will increase, this is preferred because it will permit attainment of heat resistance.

It is preferred that the glass transition temperature of the crystalline polylactic acid resin be not less than 30° C but not greater than 70° C, more preferred that this be not less than 35° C but not greater than 70° C, and still more preferred that this be not less than 35° C but not greater than 65° C.

When glass transition temperature is not less than 35° C, optical purity will be high, and attainment of high crystallinity will be facilitated.

It is moreover preferred that melting point be 120° to 175° C. When melting point is not less than 120° C, optical purity will be high, facilitating attainment of high crystallinity. Glass transition temperature and melting point may be obtained by using a scanning calorimeter (DSC).

In addition, it is preferred that the crystalline polylactic acid resin permit oriented crystallization. It is preferred that the melt flow rate (under conditions of 210° C/2.16 kg)-which is an index of flow characteristics-of the crystalline polylactic acid resin be not less than 3 g/min but not greater than 100 g/min, more preferred that this be not less than 3 g/min but not greater than 50 g/min, still more preferred that this be not less than 4 g/min but not greater than 30 g/min, and even more preferred that this be not less than 5 g/min but not greater than 25 g/min. When melt flow rate is not less than 3 g/min, viscosity during melt forming will not be too high, and there will be less tendency to observe a reduction in productivity or the like. When melt flow rate is not greater than 100 g/min, there will be less tendency toward brittleness, and there will be less tendency to observe a reduction in strength.

It is preferred that the molecular weight of the crystalline polylactic acid resin used in accordance with the present invention be such that the aforesaid polystyrene equivalent weight-average molecular weight thereof is in the range 50,000 to 300,000, more preferred that this be 70,000 to 250,000, and still more preferred that this be 80,000 to 200,000. When this is not less than 100,000, there is less tendency for the resin to become brittle. When polystyrene equivalent weight-average molecular weight is not greater than 300,000, there will be less tendency for melt viscosity to increase, and there will be less tendency for workability in terms of melt formability and so forth to decrease.

The crystalline polylactic acid resin may be easily obtained by melt ring-opening polymerization from lactide raw material.

As commercially available polylactic acid resins, Ingeo which is an L-enantiomer polymer manufactured by Nature Works, Revoda manufactured by Zhejiang Hisun Biomaterials Co., Ltd., Luminy polylactic acid resin manufactured by Corbion, and so forth may be cited.

The polyester resin composition in accordance with the present invention may comprise any of various additives such as lubricant, antistatic agent, opacifier, colorant, antifoaming agent, antistatic agent, ultraviolet light absorber, melt viscosity increasing agent, adhesion increasing agent, barrier properties imparting agent, antioxidant, thermal stabilizer, plasticizer, crystal nucleating agent, and so forth.

As specific examples of additives, titanium dioxide, silica microparticles, kaolin, zirconium oxide, magnesium oxide, calcium carbonate, and other such inorganic lubricants, crosslinked high-molecular-weight molecules comprising acrylic acid, methacrylic acid, acrylic acid ester, methacrylic acid ester, and/or other such acrylic monomers, and other such organic lubricants, alkyl sulfonates, polyfunctional isocyanates, polyfunctional carbodiimide compounds, polyfunctional epoxy compounds, aliphatic and aromatic polyester resins, polyurethane resin, polycarbonate resin, acrylic resin, vinyl resin, low-molecular-weight barrier properties imparting agents, polyglycolic acid, Irganox 1010 (manufactured by Ciba Japan), and other such antioxidants, polyglycerins, phosphorous-type compounds, and other such polymerization catalyst deactivators, and so forth may be cited. Two or more additives may be used in combination.

It is preferred that melting point of additives other than inorganic compounds be not greater than 200° C. When this is not greater than 200° C, such resins will tend to melt with molten polyester resin, and there will be less tendency for these to cause occurrence of poor external appearance.

While the amounts of such additives which may be added thereto may be adjusted as appropriate depending on the properties that are intended to be imparted thereby, it is preferred that this be in the range 0 wt% to 10 wt%. When this is not greater than 10 wt%, there will be less tendency for decrease in various properties to occur.

A method for producing biaxially stretched polyester film in accordance with the present invention will now be described. It is preferred that a method for producing biaxially stretched polyester film in accordance with the present invention comprise Operation A through Operation D, below, in this order. Tc refers to crystallization temperature when heated (° C), Tg refers to glass transition temperature (° C), and Tm refers to melting point (° C).

Operation A: Operation in which composition comprising polyester resin for which Tc - (Tg + Tm)/2 is not less than -25° C but not greater than 35° C is melt extruded to obtain unstretched polyester resin composition sheet.

Operation B: Operation in which the unstretched polyester resin composition sheet obtained at Operation A is heated so as to be within the range not less than Tg + 5 (° C) of the polyester resin but not greater than Tg + 40 (° C) of the polyester resin, and this is stretched so that the stretching ratio in the machine direction is within the range not less than 2x but not greater than 6x to obtain uniaxially oriented polyester resin composition film.

Operation C: Operation in which the uniaxially oriented polyester resin composition film obtained at Operation B is heated so as to be within the range not less than Tc - 46 (° C) of the polyester resin but not greater than Tc + 25 (° C) of the polyester resin, and this is stretched so that the stretching ratio in the transverse direction is within the range not less than 4x but not greater than 8x to obtain biaxially oriented polyester resin composition film.

Operation D: Operation in which the biaxially oriented polyester resin composition film obtained at Operation C is made to undergo relaxation within the range not less than 3% but not greater than 20% in the transverse direction of the film as it is heated so as to be within the range not less than Tm - 40 (° C) of the polyester resin but not greater than Tm - 5 (° C) of the polyester resin.

The respective Operations will now be described in detail.

Operation A

Pellets of a composition comprising polyester resin for which Tc - (Tg + Tm)/2 is not less than -25° C but not greater than 35° C are first dried so as to cause the moisture content thereof to be less than 100 ppm.

The pellets are then supplied to an extruder, are heated and melted to not less than the melting point of the polyester resin, e.g., 280 ° C, and are melt extruded in sheet form from a T die. The sheet in molten form is moreover through use of the electrostatic charge application method made to adhere to a rotating metal roller set to 23° C, causing this to cool and solidify, to obtain an unstretched sheet. Extrusion temperature within the extruder is not less than the melting point, being adjusted as appropriate in correspondence to the resin employed.

Where this will be laminated with thermoplastic resin(s) of other composition(s), in addition to the possibility of using the coextrusion method as is typically employed, adoption of methods such as coating following film formation and/or during the course of film formation is preferred.

For example, pellets of a composition comprising polyester resin for which Tc - (Tg + Tm)/2 is not less than -25° C but not greater than 35° C that have been dried so as to cause the moisture content thereof to be less than 100 ppm and a polyester resin composition that has a composition which is different therefrom and that has been dried might be prepared.

Two or more extruders might then be used for the respective resin compositions, these might be heated and melted to not less than the melting points thereof and might be fed by way of different flow passages, a multilayer feedblock or static mixer, multilayer multimanifold die, or the like being used to achieve multilayer lamination thereof. Or only a single extruder might be used, it being possible for the aforementioned multilayering apparatus to be introduced in the melt line between the extruder and a T die.

The molten resin composition which has been made to be multilayered is then melt extruded in sheet form from a T die. The sheet in molten form is moreover through use of the electrostatic charge application method made to adhere to a rotating metal roller set to 23° C, causing this to cool and solidify, to obtain an unstretched sheet.

Operation B

The unstretched sheet obtained thereby is then stretched in the machine direction. It is preferred that stretching in the machine direction be such that the unstretched polyester resin composition sheet obtained at Operation A is heated so as to be within the range not less than Tg + 5 (° C) of the polyester resin but not greater than Tg + 40 (° C) of the polyester resin, and such that this is stretched so that the stretching ratio in the machine direction is within the range not less than 2x but not greater than 6x to obtain uniaxially oriented polyester resin composition film.

Stretching this within this range in the machine direction will cause birefringence {Nx - (Ny + Nz)}/2 of the uniaxially oriented film which is obtained to tend to be not less than 0.03 but not greater than 0.10.

It is more preferred that the machine direction stretching temperature be not less than Tg + 10 (° C), and even more preferred that this be not less than Tg + 15° C. Furthermore, it is more preferred that this be not greater than Tg + 35 (° C), and even more preferred that this be not greater than Tg + 28° C.

Even where the polyester resin does not tend to crystallize, causing birefringence {Nx - (Ny + Nz)}/2 of the uniaxially oriented film that was obtained to be not less than 0.03 but not greater than 0.10 will make it possible to increase orientation and crystallinity of the film at Operation C which follows.

Note that Nx, Ny, and Nz respectively refer to the birefringence of the film in the machine direction, transverse direction, and thickness direction.

With respect to the method for measuring the birefringence of the polyester resin film that has been stretched in the machine direction, a method in which a sample of the film is taken following stretching thereof in the machine direction and this is measured using an Abbe refractometer, a method in which an online birefringence measurement apparatus is employed, or any other desired method may be employed, it being possible to employ any measurement method whatsoever.

Operation C

The uniaxially oriented polyester resin composition film obtained at Operation B is then heated so as to be within the range not less than Tc - 46 (° C) of the polyester resin but not greater than Tc + 25 (° C) of the polyester resin, and this is stretched so that the stretching ratio in the transverse direction is within the range not less than 4x but not greater than 8x to obtain biaxially oriented polyester resin composition film.

When this comprises polyester resin for which Tc - (Tg + Tm)/2 is not less than -25° C but not greater than 35° C, if the transverse direction stretching temperature is not less than Tc - 46 (° C), it is thought that thermal mobility of the polyester molecules thereof will tend not to decrease and that recrystallization due to orientation will tend to proceed.

Furthermore, if this is not greater than Tc + 25 (° C), it is thought for reasons such as the fact that microcrystals serving as crystallization nucleation sites will tend to be produced, the fact that stresses acting on the film when it is stretched in the transverse direction will tend not to decrease, and the fact that polyester molecular chains will tend to be more easily oriented, that crystallization will tend to more easily proceed.

It is more preferred that the transverse direction stretching temperature be not less than Tc - 30 (° C), and even more preferred that this be not less than Tc - 15 (° C). Furthermore, not greater than Tc + 18 (° C) is more preferred.

When the stretching ratio is not less than 4x, it is thought because polyester molecular chains will likewise tend to be oriented that crystallization will tend to proceed. When the stretching ratio is not greater than 8x, fracture will tend not to occur. It is more preferred that the stretching ratio be not less than 5x, and even more preferred that this be not less than 5.5x.

Operation D

The biaxially oriented polyester resin composition film obtained at Operation C is made to undergo relaxation within the range not less than 3% but not greater than 20% in the transverse direction of the film as it is heated so as to be within the range not less than Tm - 40 (° C) of the polyester resin but not greater than Tm - 5 (° C) of the polyester resin. Within the foregoing temperature range, it will be possible to adequately cause relaxation of amorphous regions without causing decrease in crystallinity, and it will be possible to reduce thermal shrinkage and shrinkage stress in the biaxially oriented polyester that is ultimately obtained.

When the value obtained by subtracting the plane orientation coefficient of a film that has not undergone Operation D following Operation C from the plane orientation coefficient of a film that has undergone Operation D is not less than 0 but not greater than 0.04, this indicates that causing the film to undergo Operation D results in little or no increase in crystallinity.

Furthermore, causing the value obtained by subtracting the density of a film that has not undergone Operation D following Operation C from the density of a film that has undergone Operation D to be not less than 0.001 but not greater than 0.012 will make it possible to achieve reduced thermal shrinkage and will make it possible to achieve improved strength-specifically impact strength-at the film.

Heating to within the range not less than Tm - 30° C of the polyester resin but not greater than Tm - 5° C thereof is preferred, heating to within the range not less than Tm - 20 (° C) but not greater than Tm - 7 (° C) is preferred, and causing relaxation within the range not less than 3% but not greater than 20% is preferred.

Stretching Characteristics

While it is sometimes the case that there will be occurrence of fracture at Operation A through Operation C-and particularly at Operation B through Operation D-it is preferred that the film be capable of being collected, and it is more preferred that there be no occurrence of film fracture.

Film Properties

It is preferred that biaxially oriented polyester film in accordance with the present invention satisfy (1) through (3), below.

What is referred to here in the context of biaxially oriented polyester film in accordance with the present invention as the "machine direction" is the direction corresponding to the direction of flow during operations for producing the film, and what is referred to as the "transverse direction" is a direction perpendicular to the aforementioned direction of flow during the operations for producing the film.

(1) Maximum value of thermal shrinkage stress in machine direction when at or above Tg (° C) of polyester resin is not less than 0.1 MPa but not greater than 4.0 MPa.
(2) Thermal shrinkage in machine direction when treated for 30 minutes at 150° C is not less than 0.1% but not greater than 3.0%.
(3) Impact strength is not less than 0.5 J/12 $\mu$m but not greater than 1.0 J/12 $\mu$m.

Where the biaxially oriented polyester film is a laminated film, Tg (° C) of a polyester resin for which Tc - (Tg + Tm)/2 is not less than -25° C but not greater than 35° C is employed as the Tg (° C) of the polyester resin at (1).

The respective properties will now be described.

(1) Thermal Shrinkage Stress in Machine Direction

It is preferred that biaxially oriented polyester film in accordance with the present invention be such that the maximum value of thermal shrinkage stress when at or above the glass transition temperature is not less than 0.1 MPa but not greater than 4.0 MPa. When the maximum value of thermal shrinkage stress at or above the glass transition temperature of the film is not greater than 4.0 MPa, because tension will not become excessively high during operations in which the film is transported while being heated such as is the case with printing treatment, overcoat treatment, drying operations, and so forth, the external appearance following treatment will be excellent. When the maximum value of thermal shrinkage stress at or above the glass transition temperature of the film is not less than 0.1 MPa, because there will be occurrence of an appropriate degree of tension during operations in which the film is heated such as is the case with printing treatment, overcoat treatment, drying operations, and so forth, this will facilitate printing treatment.

It is more preferred that the maximum value of thermal shrinkage stress at or above the glass transition temperature be not less than 0.5 MPa but not greater than 3.6 MPa, still more preferred that this be not less than 1.0 MPa but not greater than 3.3 MPa, and particularly preferred that this be not less than 1.5 MPa but not greater than 3.0 MPa.

(2) Thermal Shrinkage in Machine Direction

It is preferred that a biaxially oriented polyester film in accordance with the present invention be such that thermal shrinkage in the machine direction of the film when treated for 30 minutes at 150° C is not less than 0.1% but not greater than 3.0%. Even where the maximum value of thermal shrinkage stress at or above the glass transition temperature in the machine direction of the film is not less than 0.1 MPa but not greater than 4.0 MPa, because when thermal shrinkage in the machine direction of the film when treated for 30 minutes at 150° C exceeds 3.0% this will tend to cause there to be a large change in dimensions during bag forming treatment or other such operations in which heat sealing is carried out at high temperature, this will be inadequate with respect to endurance and with respect to the external appearance and shape of the bag.

It is more preferred that thermal shrinkage in the machine direction of the film when treated for 30 minutes at 150° C be not less than 0.3% but not greater than 2.7%, still more preferred that this be not less than 0.3% but not greater than 2.4%, and more preferred that this be not less than 0.5% but not greater than 2.3%.

(3) Impact Strength

A biaxially oriented polyester film in accordance with the present invention is such that the impact strength thereof is not less than 0.5 J/12 $\mu$m but not greater than 1.0 J/12 $\mu$m. When impact strength is 0.5 J/12 $\mu$m, endurance is excellent, as pinholes and ripping will tend not to occur when the film is subjected to bending and/or impact. It is preferred that impact strength be not less than 0.55 J/12 $\mu$m, and more preferred that this be not less than 0.6 J/12 $\mu$m. If there is on the order of 1.0 J/12 $\mu$m of impact strength, endurance will be adequate.

Suitability for Printing Treatment

With respect to the external appearance of a film obtained by carrying out gravure printing in which gravure ink is printed on a biaxially oriented polyester film in accordance with the present invention, and this is dried to form printed ink layer(s), it is sufficient that the external appearance thereof be satisfactory. Even where some slight wrinkling or sagging is observed it will be sufficient so long as there is adequate planarity, but it is preferred that no wrinkling be visible.

Suitability for Undergoing Working

After causing a biaxially oriented polyester film in accordance with the present invention to be coated with a polyester-type adhesive, this may be made into a polymer sandwich or the like with aluminum foil or the like and/or by extruded lamination or dry lamination of polyethylene film or polypropylene film or other such polyolefin film of thickness 20 μm to 60 μm, and aging may be carried out under conditions of 30° to 50° C to obtain a laminated body capable of being used as a bag for packaging.

Two of such laminated bodies might be stacked one atop the other such that the olefin film sides are toward the interior, heat sealing being carried out at a temperature not higher than the melting point of the olefin film to fabricate a bag for packaging.

Bag Breakage Properties

Bag break properties may be evaluated by causing the foregoing fabricated bag for packaging to be filled with water or other such contents, repeatedly raising this to a given height, e.g., a height of 1 m, and causing it to be dropped therefrom, and recording the number of iterations until bag breakage or water leakage occurs. Not less than two iterations is preferred, and not less than five iterations is more preferred. Where this is under one iteration, this will pose a practical impediment to transport of packaged items. It is most preferred if there is neither bag breakage nor water leakage at five iterations. When a film having high fill impact strength is employed, bag breakage properties will be excellent.

Container Lid Material

A film in accordance with the present invention may be used as a lid material for sealing opening(s) of a container.

As method for causing the container to be sealed by film for use as lid material, not only ordinary heat sealing but also any of various methods such as ultrasonic sealing, impulse sealing, and so forth may be employed, seals made using an ordinary heat seal bar in particular and seals made by ultrasonic sealing being particularly preferred.

While it is preferred when using ultrasonic sealing to carry out sealing that a resin composition layer having a sealable layer be provided, the principle of that sealing method being such that there are situations in which adhesion is possible without presence of a resin composition layer having a sealable layer, it will in such situations be unnecessary.

Where a resin composition layer having a sealable layer is not provided at the film, it is possible to employ methods such as those in which a resin composition layer having a heat-sealable layer is provided at the surface surrounding the opening of the container and/or the like.

As preferred method for sealing the opening of the container, causing a resin composition layer having a sealable layer to be provided at one face of biaxially oriented polyester film in accordance with the present invention, methods in which biaxially oriented polyester film in accordance with the present invention having a sealable resin composition layer at the surface thereof is made to adhere to the surface surrounding the opening of the container such that the side of the former on which the sealable resin composition layer is present is made to face the latter, and so forth may be cited.

It is preferred that the sealable resin composition consist mostly of polyester-type resin. Furthermore, so as to facilitate opening of the container as a result of removal of the lid material therefrom, it is preferred that this be easily pealable such that seal strength following sealing of noncontainer by the sealable resin composition has reduced seal strength.

As polyester resin capable of being used as sealable resin composition base polymer, any of various polyester resins for which melting point and/or crystallinity are lower than those of the polyester resin at the substrate may be employed; by way of example, it being desirable that there be multivalent carboxylic acid in the form of not less than 40 mol% of terephthalic acid, and that there be glycol component in the form of not less than 80 mol% of butanediol. When there is less than 40 mol% of terephthalic acid and there is less than 80 mol% of butanediol, this will tend to cause decrease in melting point, making it difficult to carry out retort sterilization at high temperatures. Furthermore, there may be reduction in crystallization rate, and/or occurrence of blocking when film is being rolled up at the time of film formation.

As polyester resin, this may be copolymerized with other component(s) to the extent that doing so would not cause it to depart from the foregoing range(s). As multivalent carboxylic acid component at such time, isophthalic acid, orthophthalic acid, naphthalene dicarboxylic acid, furandicarboxylic acid, succinic acid, adipic acid, azelaic acid, sebacic acid, decanoic acid, dimer acid, cyclohexanedicarboxylic acid, trimellitic acid, and other such known substances may be used. Furthermore, as diol component, ethylene glycol, 1,2-propanediol, 1,3-propylene glycol, 2-methyl-1,3-propanediol, 1,4-butanediol, pentanediol, 3-methylpentanediol, hexanediol, nonanediol, cyclohexanedimethanol, trimethylolpropane, and/or the like may be used.

To appropriately adjust seal strength and achieve satisfactory easy pealability, besides polyester resin which is the primary constituent, polyolefin resin may be present therein. Where polyolefin resin is blended therein, it is preferred that this be blended therein in an amount that is 3 wt% to 20 wt%, and more preferred that this be 8 wt% to 20 wt%. Causing polyolefin resin to be present therein in an appropriate amount will make it possible achieve easy pealability such that the peel strength thereof is appropriate (e.g., a peel strength of 1 kgf/15 mm to 2 kgf/15 mm). To obtain particularly excellent easy pealability, i.e., such that there is a satisfactory perception of pealing, when actually manually peeling this off therefrom, it is preferred that polyolefin resin be blended therein in an amount that is not less than 3 wt%. However, when the amount blended therein is excessive, this will tend to cause seal strength to decrease; and moreover, because this will tend to cause flavor characteristics to decrease, there will be occurrence of problems such as adsorption of container content components and/or resin smell. As polyolefin-type resin that for addition thereto, polyethylene, polypropylene, polybutene, ionomer, ethylene propylene copolymer, ethylene butene copolymer, propylene butene copolymer, and/or the like may be used.

It is preferred that the glass transition temperature of the polyester resin employed as sealable resin composition base polymer be not greater than 0° C, and more preferred that this be not greater than -5° C. When the glass transition temperature is too high, there will be a tendency for volumetric shrinkage during crystallization of crystalline polyester to increase, and for adhesion with respect to crystalline polyethylene terephthalate to be markedly reduced.

It is preferred that the melting point of the polyester resin employed as sealable resin composition base polymer be 120° to 200° C, and more preferred that this be 120° to 180° C. When melting point is too low, it is sometimes the case that there will be occurrence of whitening and/or deformation of adhesion layer(s) when retorting, causing worsening of external appearance, and there will also moreover be a tendency toward marked reduction in seal strength. When melting point is too high, this tends to make it necessary to increase sealing temperature, and too high a sealing temperature tends to cause occurrence of poor external appearance due to softening and deformation of C-PET. From the standpoint of film formability, it is preferred that intrinsic viscosity of the crystalline polyester ordinarily be on the order of 0.5 to 2.0.

Preferably causing 5 wt% to 60 wt% of polyether glycol to be copolymerized with the polyester resin employed as sealable resin composition base polymer will make it possible to attain satisfactory easy pealability. When there is too little polyether glycol, there will be a tendency for adhesive force to be too high, making it less easily pealable; and when there is too much (e.g., more than 60 wt%) thereof, there will be a tendency for adhesion to decrease and for the amount of decomposing polyether glycol to increase, producing a smell. Flavor characteristics would therefore be inferior. Furthermore, it is desirable that the polyether glycol at this time be polytetramethylene glycol. By using this, it will be possible increase molecular weight to the point where it is appropriate for use as an easy pealability agent, making it possible to attain satisfactory easy pealability.

It is necessary that the melting point of the polyester resin employed as sealable resin composition base polymer be less than the melting point of the substrate. The difference between the melting point of the substrate and the melting point of the sealing layer is 1° to 50° C, it being preferred that this be 5° to 50° C, and still more preferred that this be 10° to 50° C. The sealing temperature is chosen so as to be between the melting points of the two, a high temperature being advantageous from the standpoint of seal strength, less than 1° C not being preferred because it will cause the substrate to also undergo melting at the time of sealing, making it impossible to maintain seal integrity due to pinholes and/or rupture, while 50° C and higher will result in saturation with respect to effect in terms of sealability.

As sealing layer composition, based upon consideration of ability to recycle lid material and container together following use, compositions which are compositionally close are preferred, it being possible, for example, to employ methods such as those in which, with respect to the compositions of the substrate and container, small amount(s) of other resin component(s) are added thereto, small amount(s) of other raw material(s) are copolymerized therewith, and/or the like, it being preferred for maximum ability to take advantage of lowering of melting point(s) that copolymerization be employed. In such case, while there is no limitation with respect to type(s) of component(s) of copolymerized amount(s), that the wt% ratio pursuant to addition/copolymerization be within a range that is 5% to 60%, preferably 8% to 60%, and still more preferably 10% to 60%, is necessary if these are to be similar resins.

It is preferred that the melting point of polyester resin capable of being used as sealable resin composition base polymer be lower than the melting point of polyesther resin at a biaxially oriented polyester film serving as substrate, or the melting point of polyester resin making up a layer different from a sealable resin composition layer at a laminated biaxially oriented polyester film.

The difference between the melting point of the polyester resin at the substrate and the melting point of polyester resin capable of being used as sealable resin composition layer base polymer is 1° to 50° C, it being preferred that this be 5° to 50° C, and still more preferred that this be 10° to 50° C.

The sealing temperature is chosen so as to be between the melting points of the two, a high temperature being advantageous from the standpoint of seal strength, less than 1° C not being preferred because it will cause polyester resin at the substrate to also undergo melting at the time of sealing, making it impossible to maintain seal integrity due to pinholes and/or rupture, while 50° C and higher will result in saturation with respect to effect in terms of sealability.

Regarding sealable resin composition, based upon consideration of ability to recycle lid material and container together following use, compositions which are compositionally close are preferred, it being possible, for example, to employ methods such as those in which, with respect to the compositions of the substrate and container, small amount(s) of other resin component(s) are added thereto, small amount(s) of other raw material(s) are copolymerized therewith, and/or the like, it being preferred for maximum ability to take advantage of lowering of melting point(s) that copolymerization be employed.

To address issues related to the environment that have become of concern of late, it is preferred that polyester resins used in accordance with the present invention be recycled or recyclable resins, resins derived from plants, and the like. Where recycled resins are to be employed, resins obtained from the collection and recycling of PET (polyethylene terephthalate) resin bottles are suitable therefor. With respect to resins derived from plants, it is preferred that these be resins for which biomass content as determined by the fractional content of $^{14}C$, which is an ISO-compliant analytical method therefor, is 1% to 100%, it being still more preferred that this be 3% to 100%. Where this is 1% or less, the $CO_2$ emissions reduction effect achieved as a result of using raw materials derived from plants will be small.

Furthermore, any of various additives may be added as necessary to the sealable resin composition. For example, lubricants in the form of the foregoing inorganic lubricants and/or organic lubricants may be used, and antistatic agents might be stearic acid monoglyceride, polyoxyethylene sorbitan acid, and/or the like. Furthermore, to the extent that doing so does not greatly change the properties thereof, small amounts of polyolefin-type resin, polyamide, polycarbonate, and so forth may be present therein as necessary.

It is preferred that thickness of the sealable resin composition layer be within the range 0.15 $\mu$m to 20 $\mu$m, more preferred that this be 0.2 $\mu$m to 10 $\mu$m, still more preferred that this be 0.3 $\mu$m to 8 $\mu$m, even more preferred that this be 0.5 $\mu$m to 8 $\mu$m, and particularly preferred that this be 1.0 $\mu$m to 8 $\mu$m. When thickness of the sealing layer is not less than 0.1 $\mu$m, seal strength will tend to be exhibited; if there is on the order of 20 $\mu$m of thickness, this will be adequate. From the standpoint of recyclability, it is preferred that thickness of the sealing layer be not greater than 12 $\mu$m. It is more preferred that this be not greater than 10 $\mu$m, still more preferred that this be not greater than 8 $\mu$m, and even more preferred that this be not greater than 4 $\mu$m.

While the sealable lid material film thickness may be defined as being any desired value depending on the use to which it will be put, this is ordinarily on the order of 20 $\mu$m to 150 $\mu$m. The sealable resin composition layer may be laminated using another known adhesive.

Container

After the container has been filled with food, biaxially oriented polyester film in accordance with the present invention may be used as lid material to seal this, following which this may be used as any of various packaged containers or other such packaged material. The container is such that as a result of crystallization having been carried out it may be capable of being used as a container excelling in heat resistance such that it is capable of withstanding retorting and/or the like. For example, sterilization treatment pursuant to retort sterilization treatment may be carried out, or processing involving heating with a convection oven or microwave oven may be carried out, it being possible for it to be used as a container for use with retort food or food to be heated with a convection oven or microwave oven.

Because polyester resin employed in film for use as a lid which comprises film in accordance with the present invention, and a container resulting from combination thereof with the container comprising polyester resin of composition similar to that of the polyester resin used in the film for use as the lid, excel not only in those characteristics which one would expect them to have as such, i.e., flavor retention, heat resistance, formability, and so forth, but also excel in recyclability following use, and in addition are extremely excellent with regard to suitability for waste processing, suitability for the environment, and so forth, there being no production of harmful substances or the like when carrying out incinerative waste processing thereof, these constitute preferred embodiments of the present invention.

At such time, where the container is made up of material having good barrier properties, as this will constitute a container having barrier properties which is derived from a single material, this constitutes a still more preferred method of using same. The barrier properties of the material used are such that the oxygen permeability thereof is not greater than 2000 ml/m$^2$/d/MPa, it being preferred that this be not greater than 500 ml/m$^2$/d/MPa, and most preferred that this be not greater than 200 ml/m$^2$/d/MPa.

Polyester Resin Composition for Use as Container

It is preferred that a biaxially oriented polyester film and a container employing laminated biaxially oriented polyester film as lid material in accordance with the present invention comprise polyester resin composition(s).

Polyester Resin

As one specific example of a polyester resin that may be used in a polyester resin composition making up the container, polyeter resin having ethylene glycol and terephthalic acid as constituents thereof may be cited.

Another specific example of a polyester resin that may be used in a polyester resin composition making up the container might be a polyeter resin which has ethylene glycol and terephthalic acid as primary constituents and which as dicarboxylic acid component other than terephthalic acid is copolymerized with monomer in the form of at least one species selected from the among the group consisting of isophthalic acid, $p$-β-oxyethoxybenzoic acid, 2,6-naphthalenedicarboxylic acid, 4,4'-dicarboxybenzophenone, bis-(4-(carboxyphenylethane), adipic acid, sebacic acid, glutaric acid, succinic acid, 2,5-furandicarboxylic acid, 5-sodiosulfo isophthalic acid, and cyclohexane-1,4-dicarboxylic acid. It is preferred that that these be present in an amount that is not less than 3 mol% but not greater than 30 mol%, and more preferred that this be not less than 5 mol% but not greater than 15 mol%, isophthalic acid, adipic acid, sebacic acid, glutaric acid, and 2,5-furandicarboxylic acid being more preferred as monomer.

Or it might be a polyeter resin which as glycol component other than ethylene glycol is copolymerized with monomer in the form of at least one species selected from the among the group consisting of propylene glycol, butanediol, neopentyl glycol, diethylene glycol, cyclohexanedimethanol, ethylene oxide adduct of bisphenol A or the like, polyethylene glycol, polypropylene glycol, and polytetramethylene glycol. It is preferred that that these be present in an amount that is not less than 3 mol% but not greater than 30 mol%, and more preferred that this be not less than 5 mol% but not greater than 15 mol%, neopentyl glycol and diethylene glycol being more preferred as monomer.

Polyester resin employed in accordance with the present invention is such that glycol component other than ethylene glycol and dicarboxylic acid component other than terephthalic acid may be used in combination.

Another specific example of a polyester resin that may be used in a polyester resin composition making up the container might be a polyester having crystallinity when by itself and which comprises a bent dicarboxylic acid and ethylene glycol.

Furthermore, as raw materials which may be employed, besides those derived from fossil fuels, it is preferred that those derived from plants or those which may be obtained by chemical recycling or the like be employed. As raw materials derived from plants, bioethylene glycol, biopropylene glycol, biobutane diol, bioadipic acid, biosebacic acid, bioglutaric acid, bioterephthalic acid, biofurandicarboxylic acid, and so forth may be cited. As raw materials which may be obtained by chemical recycling, recycled terephthalic acid, recycled isophthalic acid, recycled naphthalenedicarboxylic acid, recycled furandicarboxylic acid, and so forth may be cited.

There is no particular limitation with respect to the method for producing such polyester resins. That is, those produced by either the transesterification method or by the direct polymerization method may be employed. Furthermore, to increase molecular weight, there is no objection to those produced by solid-state polymerization for the purpose of reducing oligomer content.

It is preferred that intrinsic viscosity of such polyester resins be in the range 0.57 dl/g to 1.2 dl/g, and more preferred that this be in the range 0.60 dl/g to 1.00 dl/g.

When intrinsic viscosity of the polyester resin is not less than 0.57 dl/g, this will tend to facilitate increase in impact resistance. When intrinsic viscosity of the polyester resin is not greater than 1.2 dl/g, this will result in increased resin pressure during the forming operation, making forming of this into a container difficult.

Another specific example of a polyester resin that may be used in a polyester resin composition making up the container might be a crystalline polylactic acid resin which is an aliphatic polyester. Crystalline polylactic acid resin may be obtained by using a compound having a hydroxyl group as initiator in the presence of a known catalyst to carry out ring-opening polymerization of a lactide, it being preferred that the lactide employed be one of high optical purity; i.e., one for which the ratio of L-lactide (hereinafter "L enantiomer")/D-lactide (hereinafter "D enantiomer") is 100/0 to 85/15 (wt%) or 15/85 to 0/100 (wt%). Because when the fractional amount of the L enantiomer is not less than 85 wt% or not greater than 15 wt% it will be the case not only that crystallinity will be adequate but that melting point will increase, this is preferred because it will permit attainment of heat resistance.

It is preferred that the glass transition temperature of the crystalline polylactic acid resin be not less than 30° C but not greater than 70° C, more preferred that this be not less than 35° C but not greater than 70° C, and still more preferred that this be not less than 35° C but not greater than 65° C.

When glass transition temperature is not less than 35° C, optical purity will be high, and attainment of high crystallinity will be facilitated.

It is moreover preferred that melting point be 120° to 175° C. When melting point is not less than 120° C, optical purity will be high, facilitating attainment of high crystallinity. Glass transition temperature and melting point may be obtained by using a scanning calorimeter (DSC).

In addition, it is preferred that the crystalline polylactic acid resin permit oriented crystallization. It is preferred that the melt flow rate (under conditions of 210° C/2.16 kg)-which is an index of flow characteristics-of the crystalline polylactic acid resin be not less than 3 g/min but not greater than 100 g/min, more preferred that this be not less than 3 g/min but not greater than 50 g/min, still more preferred that this be not less than 4 g/min but not greater than 30 g/min, and even more preferred that this be not less than 5 g/min but not greater than 25 g/min. When melt flow rate is not less than 3 g/min, viscosity during melt forming will not be too high, and there will be less tendency to observe a reduction in productivity or the like. When melt flow rate is not greater than 100 g/min, there will be less tendency toward brittleness, and there will be less tendency to observe a reduction in strength.

It is preferred that the molecular weight of the crystalline polylactic acid resin be such that the aforesaid polystyrene equivalent weight-average molecular weight thereof is in the range 100,000 to 300,000, more preferred that this be 100,000 to 250,000, and still more preferred that this be 100,000 to 200,000. When this is not less than 100,000, there is less tendency for the resin to become brittle. When polystyrene equivalent weight-average molecular weight is not greater than 300,000, there will be less tendency for melt viscosity to increase, and there will be less tendency for workability in terms of melt formability and so forth to decrease.

The crystalline polylactic acid resin may be easily obtained by melt ring-opening polymerization from lactide raw material.

As commercially available polylactic acid resins, Ingeo which is an L-enantiomer polymer manufactured by Nature Works, Revoda manufactured by Zhejiang Hisun Biomaterials Co., Ltd., Luminy polylactic acid resin manufactured by Corbion, and so forth may be cited.

Catalyst

Whereas any of various polymerization catalysts can be used in the manufacture of polyester resin that may be used in a polyester resin composition making up the container, while antimony-type catalysts, germanium-type catalysts, titanium-type catalysts, and so forth may be used, use of aluminum-type catalysts will be advantageous from the standpoint of recyclability and so forth.

As Al compounds that may be used in the manufacture of polyester resin, aluminum formate, aluminum acetate, aluminum propionate, aluminum oxalate, and other such carbonates, oxides, aluminum hydroxide, aluminum chloride, aluminum hydroxychloride, aluminum carbonate, and other such inorganic acid salts, aluminum methoxide, aluminum ethoxide, and other such aluminum alkoxides, aluminum chelate compounds with aluminum acetylacetate and so forth, aluminum acetylacetonate, trimethylaluminum, triethylaluminum, and other such organoaluminum compounds, as well as partially hydrolyzed versions thereof, and so forth may be cited. Particularly preferred thereamong are aluminum acetate, aluminum chloride, aluminum hydroxide, aluminum hydroxychloride, aluminum lactate, and aluminum acetylacetonate. It is preferred that Al compound(s) be added in an amount sufficient to cause the amount of Al remaining in the polymer that is produced to be within the range 5 ppm to 200 ppm.

Furthermore, where Al compound(s) are employed, these may be used in combination with alkali metal compound(s) and/or alkaline earth metal compound(s). As alkali metal compounds and alkaline earth metal compounds, acetates or other such carbonates, alkoxides, and so forth of such elements may be cited, these being added to the reaction system in powder, aqueous solution, ethylene glycol solution, or other such form. It is preferred that alkali metal compound(s) and/or alkaline earth metal compound(s) be added in an amount sufficient to cause the amount of such element(s) remaining in the polymer that is produced to be within the range 1 ppm to 50 ppm. The foregoing catalysts compounds may be added at any desired step(s) during the foregoing polyester producing reaction operation(s).

Furthermore, any of various phosphorous compounds may be used as stabilizer. As phosphorous compounds which may be used, phosphoric acid, phosphorous acid, and phosphonic acid, as well as derivatives thereof and so forth may be cited. Specific examples thereof include phosphoric acid, phosphoric acid trimethyl ester, phosphoric acid triethyl ester, phosphoric acid tributyl ester, phosphoric acid triphenyl ester, phosphoric acid monomethyl ester, phosphoric acid dimethyl ester, phosphoric acid monobutyl ester, phosphoric acid dibutyl ester, phosphorous acid, phosphorous acid trimethyl ester, phosphorous acid triethyl ester, phosphorous acid tributyl ester, methylphosphonic acid, methylphosphonic acid dimethyl ester, ethylphosphonic acid dimethyl ester, phenylphosphonic acid dimethyl ester, phenylphosphonic acid diethyl ester, phenylphosphonic acid diphenyl ester, and so forth, it being possible for any one of these to be used alone, or for any two or more of these to be used in combination. It is preferred that phosphorous compound(s) be added at any desired step(s) during the foregoing polyester producing reaction operation(s) and in an amount sufficient to cause the amount of phosphorous remaining in the polymer that is produced to be within the range 5 ppm to 100 ppm.

Fine Matter

Among the operations making up the polyester resin production operations, at operation(s) during which melt polycondensation polymer is made into chips, solid-state polymerization operation(s), operation(s) during which melt polycondensation polymer chips and/or solid-state polymerized polymer chips are transported, and/or the like, there is generation of granules, powder, and/or the like that are quite a bit smaller in size than might otherwise be expected based on the size of chips established during granulation. Here, such fine granules, powder, and the like is referred to as "fine matter." Fine matter of this sort due to its having been subjected to shear forces and/or forces from impact has undergone a high degree of crystallization, has properties such as permit it to promote crystallization of polyester resin, and make it possible as a result of control of the amount thereof which is present to control sheet crystallization properties.

What is referred to here as fine matter is powder and/or flakes such as will pass through a sieve outfitted with metal mesh having openings which are 1.7 mm in accordance with JIS-Z8801, measurement being carried out in accordance with the method described at the Working Examples.

As method for adjusting the amount of fine matter which is present within polyester resin so to as be within the foregoing range(s), any desired method may be employed; for example, not only methods in which polyester chips for which content of fine matter is high as a result of not having been made to undergo a sieving operation and polyester chips for which content of fine matter is extremely low as a result of having been made to undergo a sieving operation and an operation in which flow of air is employed to cause removal of fine matter are mixed in an appropriate ratio, but it is also possible to carry out adjustment by varying the size of mesh openings in the sieve(s) employed during fine matter removal operation(s), by varying sieving rate, and so forth.

Furthermore, PET flakes recovered through employment of any of a variety of recycling methods such as mechanical recycling, chemical recycling, and so forth to purify containers comprising used polyester resin, and polyester resin chips obtained by melt extrusion thereof, may be employed in mixture therewith.

Lubricant

Inorganic microparticles, organic lubricants, and/or other such aforementioned lubricants may be present within the polyester resin composition.

Furthermore, as inorganic microparticles, talc, mica, calcium carbonate, magnesium carbonate, titanium oxide, aluminum oxide, silica, silicates, barium sulfate, crustonite, kaolin, carbon black, zinc oxide, and so forth may be cited as examples.

There being no particular limitation with respect the shape(s) of the inorganic microparticles which comprise such inorganic substances, these may be spherical, needle-like, plate-like, flake-like, pulverized, and/or any other such desired particle shape(s).

It is preferred that the average particle diameter of the inorganic microparticles which are used be not greater than 10 $\mu$m $\varphi$. It is preferred that the lower limit of the range in values for the average particle diameter thereof be not less than 0.1 $\mu$m $\varphi$. Where particle diameter is small-i.e., less than 0.1 $\mu$m; and in particular, less than 0.01 $\mu$m-this constitutes a deficiency in that there is a tendency for secondary agglomeration to occur when blended within the polyester serving as matrix, not only causing loss in effectiveness as nucleating agent but also impairing the quality and external appearance of the formed product due to agglomerated matter.

Wax(es) may be present within the polyester resin composition. Causing wax(es) to be present therein will tend to eliminate coarseness at the surface of the container polyester sheet, will tend to cause inorganic-type particles that act as crystal nucleating agent to be even more finely dispersed within the polyester resin composition, and will tend to promote such effect better than would be the case were inorganic-type particles added alone.

Furthermore, as environmental endocrine disrupters and the like have come to be perceived as problem of late, those which among the various waxes are low in terms of environmental impact and in terms of harmfulness or hazardousness to the human body are to be desired.

In this regard, biodegradable waxes will be useful. As specific examples of biodegradable waxes, montan-type wax, carnauba wax, castor wax, candelilla wax, rice bran wax, and other such plant waxes, beeswax, and other such animal waxes, natural paraffin, and other such hydrocarbon waxes, stearic acid, and other such fatty acid waxes, stearamide, palmitamide, methylenebisstearoamide, ethylenebisstearoamide, oleamide, esylamide, and other such fatty acid amide waxes, lower alcohol esters of fatty acids, polyhydric alcohol esters of fatty acids, fatty acid polyglycol esters, and other such ester waxes, cetyl alcohol, stearyl alcohol, and other such alcohol waxes, metallic soaps derived from fatty acids having 12 to 30 carbons, and so forth from may be cited. Of these, plant waxes and animal waxes are preferred, montan-type wax being particularly preferred. Note, however, that there is no particular limitation with respect to the wax(es) that may be employed.

Polyolefin Resin

Polyolefin resin(s) may be present within the polyester resin composition. It is preferred that density of polyolefin resin(s) used be not greater than 0.95 g/cm$^3$.

It is more preferred that polyolefin resin density be not greater than 0.93 g/cm$^3$, and still more preferred that this be not greater than 0.92 g/cm$^3$. From the standpoints of multilayer sheet heat resistance and punching characteristics, the lower limit of the range in values is not less than 0.90 g/cm$^3$.

Furthermore, it is preferred that polyolefin resin melt flow rate (MFR) be not less than 0.1 g/10 min, more preferred that this be not less than 0.5 g/10 min, and still more preferred that this be not less than 1 g/min. From the standpoint of multilayer sheet impact resistance and other issues related to mechanical characteristics, it is preferred that the upper limit of the range in values be not greater than 100 g/10 min. Note that this density and this MFR are the values as determined based on the method at JISK-6760-1981.

As examples of the foregoing polyolefin resin, high-density polyethylene, branched low-density polyethylene, linear low-density polyethylene, ultra-low-density polyethylene, polypropylene, ethylene-propylene copolymer, maleic-acid modified polyethylene, vinyl acetate-ethylene copolymer, ethyl acrylate-ethylene copolymer, ethylene-propylene copolymer, glycidyl methacrylate-ethylene copolymer, glycidyl methacrylate-ethyl acrylate-ethylene copolymer, and so forth may be cited. Any one of these may be used alone, or two or more thereof may be used in combination. Note that throughout the present specification polyethylene resin is sometimes referred to as "PE resin".

Crystal nucleating agent(s) other than the foregoing polyolefin resin and inorganic microparticles-e.g., PBT oligomer, sodium benzoate, sodium stearate, and/or other such organic nucleating agent(s) and/or the-like may be added to the polyester resin composition.

Antioxidant(s) may be present within the polyester resin composition. As examples of antioxidants which may be used, phenol-type antioxidants, phosphorus-type antioxidants, sulfur-type antioxidants, and amine-type antioxidants may be cited, hindered-phenol-type antioxidants being particularly effective.

As such hindered-phenol-type antioxidants, known substances may be used, examples of which might include pentaerythritol-tetrakis[3-(3,5-di-tert-butyl-4-hydroxy-3-(3,5-di-tert-butyl-4-hydroxyphenyl)propionate), 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, 3,9-bis{2-[3-(3-tert-butyl-4-hydroxy-5-methyl-3-(3-tert-butyl-4-hydroxy-5-methylphenyl)propionyloxy)-1,1-dimethylethyl]-2,4,8,10-tetraoxaspiro[5,5]undecane, 1,3,5-tris(4-tert-butyl-3-hydroxy-2,6-dimethylbenzene)isophthalic acid, triethylglycol-bis[3-(3-tert-butyl-5-methyl-4-hydroxy-3-(3-tert-butyl-5-methyl-4-hydroxyphenyl)propionate), 1,6-hexanediol-bis[3-(3,3-(3,5-di-tert-butyl-4-hydroxyphenyl)propionate), 2,2-thio-diethylene-bis[3-(3,5-di-tert-butyl-4-hydroxyphenyl-3-(3,5-di-tert-butyl-4-hydroxyphenyl)propionate), octadecyl-3-(3,5-di-tert-butyl-4-hydroxyphenyl)propionate], ethyl 3,5-di-tert-butyl-4-hydroxybenzylphosphonate, methyl 3,5-di-tert-butyl-4-hydroxybenzylphosphonate, isopropyl 3,5-di-tert-butyl-4-hydroxybenzylphosphonate, phenyl 3,5-di-tert-butyl-4-hydroxybenzylphosphonate, octadecyl 3,5-di-tert-butyl-4-hydroxybenzylphosphonate, and 3,5-di-tert-butyl-4-hydroxybenzylphosphonic acid. In such case, hindered-phenol-type oxidation stabilizer(s) may be bonded to polyester.

Besides causing a polyester resin composition in which the foregoing polyolefin resin and/or the like are blended to be produced by a method in which the polyolefin resin is directly added to the polyester resin in sufficient amount to cause it to be present therein in the foregoing range(s) and this is melt kneaded, a method in which it is added in the form of masterbatch(es) and this is melt kneaded, or other such customary method, this may be accomplished by a method such as that in which the foregoing polyolefin resin is directly added thereto in the form of granules or mixed therewithin by some other such method during a step in which the foregoing polyester resin is being produced; for example, at any step(s) during melt polycondensation, immediately following melt polycondensation, immediately following precrystallization, during solid-state polymerization, immediately following solid-state polymerization, and/or the like, and/or at any time(s) during the course of operations following completion of the production step until the film forming step, or the like.

As method for causing inorganic microparticles, antioxidant(s), and/or the like to be blended therein, methods in which these are added in the form of masterbatch(es) and this is melt kneaded are preferred. In such case, it is preferred that these be blended into a polyester resin masterbatch in which the foregoing polyolefin resin has been blended.

Melt kneading may be carried out through use of any conventionally known method, it being possible for this to be carried out with good productivity using single-shaft and/or multi-shaft extruder(s). Where extruder(s) are used to carry out melt kneading, the temperature will ordinarily be not less than the melting point, it being preferred that this be performed while set to 270° to 300° C, 275° to 280° C being more preferred.

Any of various other additives, e.g., known ultraviolet light absorbers, oxygen absorbers, oxygen scavengers, epoxy-like compounds, isocyanate-like compounds, carbodiimide-like compounds, and other such compounds having reactive groups, metal deactivators, antifungal agents, fluorescent brighteners, fillers, externally added lubricants and lubricants which are made to be internally deposited during the course of reaction, mold release agents, nucleating agents, stabilizers, antistatic agents, pigments, and other various types of additives and various types of polymers may be blended as necessary into the polyester resin composition employed in the container polyester sheet. As polymers, polyamide-type polymers, polyester elastomers and other polyester-type polymers, polystyrene-type polymers, polyacrylic-type polymers, and so forth may be cited as examples. These may be added at the time of melt kneading and/or melt forming, and/or may be added in advance so as to be present within resin raw material.

In addition, ultraviolet light blocking resin, heat resistant resin, material collected from used polyethylene terephthalate bottles, and so forth may be mixed in appropriate ratio with the foregoing polyester resin composition.

Polyester sheet for use as a container comprises a single layer or a plurality of layers employing the aforementioned polyester resin. The plurality of layers comprise polyester resin compositions having respectively different compositions. At such time, it may be that it is only the type(s) and/or amount(s) of additive(s) which are present therein that is different. Where this comprises a plurality of layers, the layer that will be toward the contents when this is formed into a container and contents are placed therein will be referred to as the inner layer, and the layer opposite thereto will be referred to as the surface layer.

It is preferred that the intrinsic viscosity of the container polyester sheet be within the range 0.70 deciliters/gram to 2.00 deciliters/gram, more preferred that this be 0.75 deciliters/gram to 1.50 deciliters/gram, and still more preferred that this be 0.80 deciliters/gram to 1.30 deciliters/gram. When intrinsic viscosity is too low, it will sometimes be the case that the impact resistance, pinhole resistance, and/or other such mechanical characteristics of the polyester sheet that is obtained will be poor. Furthermore, when intrinsic viscosity is too high, it is sometimes the case that the high resin temperature of the melt at the extruder causes thermal decomposition to be intense, increasing the content of acetaldehyde and/or other such liberated low molecular weight compounds which affect flavor retention; and in addition, it is also economically disadvantageous, and will cause increase in cost, since to produce polyester resin such as will allow a polyester sheet of such high viscosity to be obtained there will be no choice but to employ uneconomical production methods.

Wax

At the container polyester sheet, it is preferred that wax be present at the surface layer thereof, and it is moreover preferred that wax also be present at the inner layer thereof.

It is preferred that wax be present at each layer in an amount that is not less than 0.01 wt%, and still more preferred that this be not less than 0.05 wt%. It is preferred that the upper limit of the range in values therefor be not greater than 1.0 wt%, and still more preferred that this be not greater than 0.5 wt%.

Polyolefin Resin

It is preferred that the total amount of polyolefin resin used in the polyester sheet be not less than 0.5 wt%, more preferred that this be not less than 1 wt%, still more preferred that this be not less than 1.5 wt%, and particularly preferred that this be not less than 2 wt%. Furthermore, it is preferred that the upper limit of the range in values therefor be not greater than 10 wt%, more preferred that this be not greater than 8 wt%, and still more preferred that this be not greater than 6 wt%.

Where the polyester sheet comprises multiple layers, it is preferred that the lower limit of the range in values for the total amount of polyolefin resin used in the polyester sheet be such that with respect to the inner layer this is not less than 0.5 wt%, more preferred that this is not less than 1 wt%, still more preferred that this is not less than 1.5 wt%, and particularly preferred that this is not less than 2 wt%. Furthermore, it is preferred that the upper limit of the range in values therefor be not greater than 10 wt%, more preferred that this be not greater than 8 wt%, and still more preferred that this be not greater than 6 wt%.

Causing the amount of polyolefin resin to be an amount within the foregoing range will make it possible for the container that is obtained to have excellent impact resistance, will cause it to have excellent punching characteristics during the punching that is carried out after it has been formed into a sheet, and will make it possible for that which is obtained to have a beautiful external appearance. In other words, when the amount of polyolefin resin is too large, there will be a tendency for such punching characteristics to worsen, and it will sometimes be the case that a phenomenon is observed in which cut sheet fragments produced by inadequate cutting remain on cut surfaces and cause occurrence of poor external appearance. In addition, there will be a tendency for the distinctive of odor of polyolefin resin to be produced. Furthermore, when there is too little thereof, the crystallization rate of the polyester sheet that is obtained will tend to be reduced, and there will be a tendency for the heat resistance of the polyester sheet to decrease, and impact resistance improvement effect will tend to be inadequate.

It is preferred that polyolefin resin substantially not be present at the surface layer. Here, where it is said that this should "substantially not be present," this does not necessarily mean that it is not present at all, it being possible for a very small amount thereof on the order of that which will not cause fouling of dies to be present thereat, and while this will vary depending on the type of polyolefin, not greater than 0.2 wt% is more preferred, not greater than 0.1 wt% is still more preferred, and not greater than 0.05 wt% is particularly preferred.

Inorganic Microparticles

It is preferred that inorganic microparticles be present at each layer of the container polyester sheet in an amount that is 0.1 wt% to 10 wt%, more preferred that this be 0.3 wt% to 7 wt%, and particularly preferred that this be 0.5 wt% to 5 wt%. When the amount blended therein is too little, it will sometimes be the case that the heat treatment temperature necessary to cause crystallization may have to be increased or the heat treatment time may have to be increased due to the fact that the crystallization rate is unchanged relative to that of unmodified polyester, and/or it will sometimes be the case that removal from the die is made difficult, lowering productivity. If on the other hand there is too much blended therein, as there will be a tendency for the degree of crystallinity attained during thermoforming to increase and for impact resistance to decrease, significant improvement in crystallization rate is not observed despite presence thereof above some fixed amount. And because not to do so would cause forming at the time of thermoforming to worsen, narrowing the range of conditions for carrying out forming, it is preferred that the amount blended therein be held to not greater than 10 wt%.

It is preferred that crystal nucleating agent be present at each layer of the container polyester sheet in an amount that is not greater than 5 wt%, this being determined as appropriate depending on the type(s) of nucleating agent(s) employed. To attain the effect of addition thereof, it is preferred at least at the inner layer of the container polyester sheet that this be not less than 0.01 wt%. Note that during manufacture of the sheet it is sometimes the case that an operation is included in which the two ends of the sheet that have been cut off therefrom are reused in the inner layer. At such time, where there is admixture into the inner layer of crystal nucleating agent that had been present in layer(s) other than the inner layer, the amount of such admixed nucleating agent may be included in the foregoing amount to be added.

Antioxidant

Furthermore, it is preferred that antioxidant be present at each layer of the container polyester sheet in an amount that is not less than 0.005 wt%, and more preferred that this be not less than 0.01 wt%; and it is preferred that this be not greater than 3.0 wt%, and more preferred that this be not greater than 2.0 wt%. When the amount blended therein is too little, it will sometimes be the case that there will be too little ability to prevent thermal oxidation, and, depending on the use to which the container will be put and/or the heat treatment conditions thereof, there may be reduction in the impact strength of the container. Furthermore, if there is too much blended therein, it will sometimes be the case that there is occurrence of problems such as the fact that coloring of the container which is obtained may become intense, or the fact that there may be an odor and/or worsening of flavor retention.

At the surface layer, resin(s) other than the foregoing polyester resin and polyolefin resin may be employed as necessary within such range(s) as will not impair the properties of the container. More specifically, for every 100 parts by weight of the foregoing polyester resin, it is preferred that resin(s) other than the foregoing polyester resin and polyolefin resin be employed in an amount that is not greater than 20 parts by weight, more preferred that this be not greater than 10 parts by weight, still more preferred that this be not greater than 5 parts by weight, and particularly preferred that this be not greater than 2 parts by weight.

It is preferred that the surface layer that makes up the container polyester sheet contain a polyester resin composition in which polyester resin and inorganic microparticles-or these and wax-are present but in which polyolefin resin is substantially not present, and it is preferred that the inner layer contain a polyester resin composition in which polyester resin and inorganic microparticles and polyolefin resin-or these and wax-are present.

At the inner layer, it is preferred that resin(s) other than the foregoing polyester resin and polyolefin resin not be employed; however, resin(s) other than the foregoing polyester resin and polyolefin resin may be employed as necessary within such range(s) as will not impair the properties of the container. More specifically, for every 100 parts by weight of the foregoing polyester resin, it is preferred that resin(s) other than the foregoing polyester resin and polyolefin resin be employed in an amount that is not greater than 20 parts by weight, more preferred that this be not greater than 10 parts by weight, still more preferred that this be not greater than 5 parts by weight, and particularly preferred that this be not greater than 2 parts by weight.

The container polyester sheet is such that, at least at the surface layer thereof, a polyester resin may be employed which is such that fine matter within the polyester resin composition is preferably present in an amount that is not less than 10 ppm, more preferably not less than 30 ppm, and still more preferably not less than 50 ppm; and this is preferably not greater than 10000 ppm, more preferably not greater than 7000 ppm, and still more preferably not greater than 5000 ppm.

When fine matter is present at the container polyester sheet in an amount that is not less than 10 ppm, crystallization rate during forming of sheets will tend not to be reduced, it will be possible to increase sheet crystallization rate under ordinary forming conditions, polyester oligomers, polyolefin oligomers, and/or the like will tend not to adhere to high-temperature forming dies, and dies will tend not to become fouled. Furthermore, it will tend to be possible for the flavor of contents to be retained. Furthermore, when fine matter is present in an amount that is not greater than 10000 ppm, crystallization rate will tend not to become too high, deep drawing characteristics during forming of the container using the vacuum forming method or the like will tend not to worsen, facilitating forming into the proper shape, and ripping will tend not to occur. Also, when polyolefin resin is mixed therewith and forming is carried out, segregation of fine matter will tend not to occur, and unevenness with respect to the amount of polyolefin resin that is blended therewithin will tend not to occur.

Cyclic Trimer

Furthermore, it is for example preferred that cyclic trimer be present in the container polyester sheet in an amount that is not greater than 0.70 wt%, more preferred that this be not greater than 0.60 wt%, and still more preferred that this be not greater than 0.50 wt%. If the amount of cyclic trimer present in the polyester sheet is too high, during thermoforming when using a vacuum forming machine to form the foregoing polyester sheet into a container or the like in the context of continuous production, there will be a tendency for oligomers and so forth from polyester resin and/or polyolefin resin to gradually adhere to and accumulate on the heated die, as a result of which there will be a tendency for problems to occur, such as worsening of mold releasability between the heated die and the foregoing polyester sheet or worsening of the luster at the inside surface of the container, and depending on the type of contents which are placed therein, there may be an effect on the taste and/or smell thereof. While there is no particular limitation with respect to the lower limit of the range in values for the amount of cyclic trimer which may be present in the polyester sheet, from the standpoint of productivity and so forth it is preferred that this be not less than 0.10 wt%, and more preferred that this be not less than 0.20 wt%.

Polyester sheet in which cyclic trimer is present in an amount that is not greater than 0.70 wt% might, for example, be obtained by using polyester resin in which cyclic trimer is present in an amount that is not greater than 0.68 wt%, and causing resin temperature during film formation to be maintained at approximately 270° to 295° C, and/or might be obtained by causing the polyester resin which is used to undergo treatment such that it is made to come in contact with water or steam at 20° to 180° C to cause deactivation of any remaining polycondensation catalyst, or by using a phosphorous compound(s) to cause deactivation thereof.

It is preferred that thermal shrinkage of the container polyester sheet be 0.1% to 8%, and more preferred that this be 0.2% to 6%. If thermal shrinkage is too low (e.g., 0.1% or lower), this will be economically disadvantageous in that it will become necessary to employ unproductive conditions in order to obtain the polyester sheet; and if this is too high, it may be that shape will be poorly defined during forming of the container, making it impossible to obtain satisfactory container shape, and/or it may be that heat sealed regions will tend to delaminate.

Where heating through use of far infrared radiation or other such noncontact method is employed as heating method during the preheating operation which takes place when the container polyester sheet is undergoing forming operations, it is preferred that this be not less than 2%, and more preferred that this be not less than 3%. Furthermore, with respect to the upper limit of the range in values therefor, it is preferred that this be not greater than 8%, and more preferred that this be not greater than 6%. If thermal shrinkage is too low (e.g., less than 2%), it may be the case that there will be occurrence of sagging of the sheet during the sheet preheating operation that takes place at the time that the container is being formed, causing marked deterioration in ease of operations. And if it is too high, it may be the case that problems similar to those described above will occur.

As method for causing thermal shrinkage of the container polyester sheet to be 0.1% to 8%, thermal shrinkage might, for example, be adjusted by adjusting the pressure acting on the sheet between the touch roller and the chill roller during manufacture of the sheet, the temperatures of the touch roller and the chill roller, the sheet takeup speed and resin extrusion amount of the polyester resin composition which is extruded from the extruder, and so forth. It is generally the case that thermal shrinkage can be reduced by carrying out adjustment so as to cause reduction in residual strain.

For example, there is a general tendency for the thermal shrinkage of the sheet which is obtained to be higher than the foregoing range when the sheet takeup speed is excessively high relative to the polyester resin composition extrusion amount, and for thermal shrinkage to be lower than the foregoing range when the takeup speed is excessively low. Furthermore, there is a tendency for thermal shrinkage to be high when pressure at the touch roller and chill roller is high.

The foregoing conditions will also depend greatly on the properties of the polyester resin composition which is employed; e.g., the degree of polymerization, copolymerized components, blending ratios, and so forth thereof. It will therefore be necessary to appropriately adjust optimal sheeting conditions in correspondence to the resin that is employed and the machine platform that is used to carry out formation into sheets.

Drying of the foregoing polyester resin composition is carried out as necessary to remove moisture content therefrom. Following removal of moisture therefrom, the resin composition may then be melted at a single-shaft extruder or twin-shaft extruder, this may be extruded onto a casting drum from a multilayer T die attached to the outlet of the extruder, and the sheet may be quenched and allowed to solidify to obtain polyester sheet.

It is preferred that thickness of the container polyester sheet be in the range 100 $\mu$m to 1000 $\mu$m, and more preferred that this be 150 $\mu$m to 800 $\mu$m.

Furthermore, sheet debris produced during film formation may be reused as raw material for layers that will not come in direct contact with food.

By causing the container polyester sheet to undergo crystallization, it is possible to impart it with heat resistance to as high as 200° C or greater. As method for carrying out heating and crystallization, methods employing hot air, methods involving infrared irradiation, methods involving dies, methods involving belt heaters, and so forth may be cited, it being possible to freely select thereamong based on the forming technique employed and so forth.

The container polyester sheet may be made to undergo pressure, vacuum, compression, or other such forming so as to cause it to be fashioned into a tray or other such container.

After being filled with food, the polyester container is sealed with the foregoing lid by means of the foregoing heat sealant, following which it may be employed in applications where sterilization treatment pursuant to known retort sterilization treatment is carried out and/or in applications where it will be processed by heating with a convection oven or microwave oven.

By causing the resin at the container to be of the same composition as the resin at the lid, or by employing compositions permitting the lid material and the container to be mixed such that transparency is maintained during melt mixture (hereinafter "resins of similar composition"), it will be possible achieve a monomaterial packaging material that excels in recyclability.

Industrial Utility

Because a biaxially oriented polyester film in accordance with the present invention will have excellent properties with respect to impact strength and heat resistance that were not present conventionally, it may be favorably used as lid material for a container and/or bag for packaging.

Moreover, it is also suitable for applications in which it will be used at high temperature such as in an inorganic oxide barrier film or the like or in an insulating film for a capacitor, motor, or the like. Furthermore, as it also allows printing treatment and coating to be carried out at high temperatures through use of inks, laminate adhesives, coating agents, and the like that could be used only with difficulty conventionally, it is expected to permit further improvements in production efficiency.

WORKING EXAMPLES

Next, the effect of the present invention will be described through use of working examples and comparative examples. Provided that they are within the scope of the technical idea of the present application, it should be understood that the films of the invention are not to be limited by the methods that are specifically disclosed below.

Methods for evaluating values related to properties employed in the present invention are first indicated below.

Evaluation Methods

(1) Polyester Resin Composition

Polyester resin was dissolved in deuterated chloroform, and a Gemini-200 nuclear magnetic resonance (NMR) analyzer manufactured by Varian was used to carry out $^1$H-NMR analysis, content (mol%) of respective constituents being determined from the integral ratios corresponding thereto.

(2) Polyester Intrinsic Viscosity (IV)

Following drying of polyester resin, this was dissolved in a solvent mixture of parachlorophenol/tetrachloroethane = 75/25 (wt% ratio). An Ubbelohde viscometer was used to measure the elution time of a solution of concentration 0.4 (g/dl) at 30° C and the elution time of the solvent alone, the Huggins equation being used to calculate intrinsic viscosity from the ratio of those times assuming a Huggins coefficient of 0.38.

(3) Polyester Resin Melting Point (Tm) and Glass Transition Temperature (Tg)

Measurement was carried out in accordance with JIS K 7121-2012 "Testing Methods for Transition Temperatures of Plastics". Using a differential scanning calorimeter (Exstar6000; manufactured by Seiko Instruments Inc.), the location of the top of the peak exhibited by the heat of crystalline melting when the temperature of a 10-mg resin sample was increased at a rate of 10° C/minute within a temperature range from 25° C to the resin melting point + 30° C was taken to be the melting point (Tm; units = ° C) thereof.

Furthermore, the temperature at the point where the portion of the curve at which the stepwise change occurring at the glass transition and a line equidistant in the direction of the vertical axis from the line which is an extension of the respective baseline would intersect was taken to be the glass transition temperature (Tg; units = ° C).

(4) Polyester Resin Crystallization Temperature When Heated (Tc)

Measurement was carried out in accordance with JIS K 7121-2012 "Testing Methods for Transition Temperatures of Plastics". Using a differential scanning calorimeter (Exstar6000; manufactured by Seiko Instruments Inc.), the temperature of a 10-mg polyester resin sample that had been quenched from a molten state was increased at a rate of 5° C/minute within a range from 25° C to the resin melting point + 30° C to obtain a curve (the DSC curve) at which heat flow (heat flow/mW) was plotted on the vertical axis, and temperature was plotted on the horizontal axis. The extremum of the crystallization peak which was observed between the glass transition temperature (Tg) and the melting point (Tm) was taken to be the crystallization temperature when heated (Tc).

Furthermore, when a clearly defined crystallization peak was not observed by the foregoing method, the crystallization temperature when heated (Tc) was determined from the DSC curve obtained when temperature was increased at a rate of 1° C/minute.

(5) Polyester Resin Crystallization Half-Time

The polyester resin was evaluated based on crystallization half-time as determined using the Avrami coefficient and crystallization rate constant at the Avrami equation indicated at Formula (3), below, and isothermal crystallization treatment carried out using a differential scanning calorimeter (Exstr6000 manufactured by SII NanoTechnology Inc.).

Isothermal crystallization treatment was such that temperature was increased at a rate of 10° C/minute from room temperature to a temperature 35° C higher than the melting point of the respective resin, was held thereat for three minutes, temperature was thereafter decreased at a rate of 50° C/minute to a prescribed temperature, was held thereat for a prescribed isothermal holding time, and was thereafter quenched in liquid nitrogen.

The prescribed temperatures were temperatures which depending on the resin were chosen as desired from among 100° C, 110° C, 120° C, 130° C, 140° C, 150° C, 160° C, 170° C, 180° C, and 190° C, the samples that were obtained having been held at the respective isothermal holding temperatures for respective isothermal holding times of 10 minutes, 50 minutes, 100 minutes, and 200 minutes.

Respective ratios X(t) of the amount of heat that caused melting of crystals in the samples that had been subjected to isothermal crystallization treatment to the theoretical amount of heat to cause melting when samples that had been treated for t (minutes) were completely crystallized were calculated from DSC curves obtained when temperature of the samples that had been subjected to isothermal crystallization treatment was again increased at a rate of 10° C/minute from room temperature to a temperature 30° C higher than the melting point of the polyester resin.

The Avrami coefficient n and crystallization rate constant K were calculated from the Avrami equation indicated at Formula (1) and X(t) and t (minutes) as the isothermal holding time.

Formula (3) was used to calculate crystallization half-time T (1/2) from the Avrami coefficient n and crystallization rate constant K.

The crystallization half-times at the respective temperatures t (temperatures which depending on the resin were chosen as desired from among 100° C, 110° C, 120° C, 130° C, 140° C, 150° C, 160° C, 170° C, 180° C, and 190° C) were compared, the temperature at which time was shortest thereamong being taken to be the crystallization temperature, and the crystallization half-time at that time being taken to be the crystallization half-time of the corresponding polyester resin.

$$\log(-\ln[1 - X(t)]) = n \log t + \log K \qquad \text{Formula (2)}$$

$$T_{1/2} = (\ln 2/K)^{1/n} \qquad \text{Formula (3)}$$

(6) Film Refractive Index and Plane Orientation Coefficient

Refractive index was measured in accordance with JIS K 7142. An Abbe refractometer was used to measure refractive index at a temperature of 23° C using the Na D line. Methylene iodide was used as immersion liquid to measure refractive index in the machine direction (Nx), refractive index in the transverse direction (Ny), and refractive index in the thickness direction (Nz). Measurements were carried out at the central region of the film.

Plane orientation coefficient ($\Delta$P) was calculated using (Formula) [(Nx + Ny)/2] - Nz.

Furthermore, birefringence ($\Delta$Nxy) was calculated using (Formula) Nx - Ny. Where other layer(s) were provided at one face, measurement was carried out three times at the face opposite thereto and the average of these was employed.

(7) Stretching Characteristics

At the Working Example and Comparative Examples below, film formation was carried out in continuous fashion for 20 minutes, and the number of times that fracture occurred partway therethrough was counted.

EXCELLENT = Fracture did not occur
GOOD = Fracture occurred but collection of film was possible
BAD = Fracture occurred frequently and collection of film was impossible

(8) Density

Measurement was carried out using a density gradient column pursuant to Method D in accordance with JIS K 7112.

Samples of size 5 mm in the transverse direction and 5 mm in the machine direction were cut from biaxially oriented polyester film, and measurement was carried out at 25° C.

(9) Thermal Shrinkage (%) of Film in Machine Direction when Heated to 150° C

Measurement was carried out in accordance with JIS C 2318-1997 5.3.4 (Dimensional Change). Rectangular samples 10 mm in the transverse direction and 190 mm in the machine direction were cut from the film, reference lines were drawn parallel to the short sides with an interval of 150 mm therebetween in the direction of the long sides from one of the short sides, and the interval (A) between respective references lines was measured.

The film was then placed in an oven in a 150° C atmosphere, subjected to heat treatment for 30 minutes at 150° C $\pm$ 3° C while under no load, following which the interval (B) between respective references lines was measured.

The following formula was used to determine the respective thermal shrinkages (%), the average thereof being taken to be the thermal shrinkage in the machine direction when heated to 150° C.

$$\text{Thermal shrinkage (\%)} = (A - B)/A \times 100 \qquad \text{Formula (4)}$$

Note however that for polylactic acid film, evaluation of thermal shrinkage when heated to 120° C was carried out by placing this in an oven in a 120° C atmosphere, and subjecting this to heat treatment for 30 minutes at 120° C $\pm$ 3° C while under no load.

(10) Thermal Shrinkage Stress (MPa) of Film in Machine Direction

A TMA/SS6100 thermomechanical analyzer manufactured by Seiko Instruments Inc. was used to carry out measurement. Rectangular samples of size 2 mm in the film transverse direction and 30 mm in the film machine direction were cut therefrom. Samples were then mounted on the device in such fashion that there was 20 mm between chucks.

Assembly L control mode was then selected, temperature was increased at a rate of 20° C/minute from room temperature to 200° C, the maximum value of the thermal shrinkage stress curve in the region for which temperature was not less than the glass transition temperature (Tg) of the polyester resin was read from the thermal shrinkage stress curve that was obtained, and this was taken to be the thermal shrinkage stress of the film in the machine direction.

(11) Impact Strength (J/12 $\mu$m)

Measurement was carried out using an impact strength measuring device manufactured by Toyo Seiki Seisaku-sho, Ltd. (product name = Film Impact Tester; product number = T-84-3). Rectangular samples 100 mm in the film transverse direction and 100 mm in the film machine direction were cut therefrom.

Samples were then mounted on the device, and a probe having a 1/2-inch-diameter spherical impacting surface was used to carry out measurement of the strength of the film with respect to impact during punching in a 23° C atmosphere, this being converted into equivalent strength per 12-$\mu$m thickness, which was taken to be the impact strength thereof, the units of which were J/12 $\mu$m.

Note that the method for correcting impact strength for thickness was as follows.

$$(\text{Impact strength}) = (\text{Measured value}) \div (\text{Thickness of measured sample}) \times 12$$

$$\text{Formula (5)}$$

(12) Suitability for Printing Treatment

Gravure ink (Lamiace 61 white two-liquid type; manufactured by Toyo Ink) was used to carry out gravure printing on the biaxially oriented polyester films used in the Working Examples and Comparative Examples, and this was dried to form a printed ink layer.

At this operation, observation was made with respect to the state of the film, evaluation being carried out in accordance with the following criteria.

At Working Examples 2-1 through 5, evaluation was carried out at the substrate layer side.

EXCELLENT = Film planarity was excellent, there being no wrinkling or waviness
GOOD = Film planarity was satisfactory but some slight wrinkling and/or waviness was observed
BAD = Wrinkling occurred and there was poor planarity

(13) Suitability for Undergoing Working

The biaxially oriented polyester films used in the Working Examples and Comparative Examples were coated with polyester-urethane-type two-liquid curable adhesive ("Takelac A525S" and "Takenate A50" manufactured by Mitsui Chemicals, Inc. in sufficient amount to yield a thickness following drying of 3 $\mu$m, straight-chain low-density polyethylene film (L-LDPE Film: L4102; manufactured by Toyobo Co., Ltd.) of thickness 40 $\mu$m was thereafter affixed thereto in such fashion as to cause these to be mutually aligned in the machine directions thereof, and aging was carried out for 3 days under conditions of 40° C to yield a laminated body.

Rectangular samples 70 mm in the transverse direction and 105 mm in the film machine direction were cut from the laminated body, two thereof were stacked one atop the other such that the straight-chain low-density polyethylene film sides of the laminated bodies were toward the interior, and external appearance was evaluated when this was heat sealed at 150° C. Note however that for polylactic acid film, heat sealing was carried out at 125° C.

EXCELLENT = External appearance was excellent, there being no wrinkling
GOOD = External appearance was satisfactory but some slight wrinkling was observed
BAD = Wrinkling was observed and external appearance was poor

(14) Bag Breakage Properties (Bag Drop Test)

The foregoing laminated film was used, heat sealing being carried out with a seal width of 1.0 cm at a sealing temperature of 160° C, to fabricate 10 bags that were 150 mm × 150 mm and that were filled water, these were made to undergo retorting for 30 minutes at 125° C, these were repeatedly raised to a height of 1 m and dropped therefrom under conditions of 25° C, and evaluated based on the average number of iterations until bag breakage or water leakage was made to occur. Note however that for polylactic acid film, heat sealing was carried out at 125° C.

EXCELLENT = Dropped 5 times or more before bag breakage or water leakage occurred.
GOOD = Dropped 2 times or more before bag breakage or water leakage occurred.
BAD = Dropped 1 time or less before bag breakage or water leakage occurred.

Although the present invention is described in further detail below in terms of working examples, it should be understood that the present invention is not limited to these working examples.

The types and particulars of the polyester resins employed at the Working Examples and Comparative Examples will now be described.

Polyester Resin A

Polyethylene Terephthalate/Isophthalate (Ethylene Isophthalate Repeating Units 10 mol%; IV = 0.95)

88 parts by weight of terephthalic acid, 12 parts by weight of isophthalic acid, 82 parts by weight of ethylene glycol (ethylene glycol/total acid component molar ratio = 2.2), and, as measured as a fraction of the acid component, 0.05 mol% elemental Ge in the form of germanium oxide, and 0.05 mol% elemental Mg in the form of magnesium acetate were loaded into a reaction apparatus comprising an inlet port, thermometer, pressure gauge, fractionating column with distillation tower, and agitator blades, nitrogen was introduced thereinto while agitation was carried out, pressure within the system was maintained at 0.3 MPa, and the esterification reaction was carried out at a temperature of 230° C to 250° C while any water generated was distilled off from the system. Following completion of the reaction, 0.04 mol% of P in the form of trimethyl phosphate was added thereto at 250° C, pressure was gradually lowered while temperature was increased, and the polycondensation reaction was carried out under vacuum conditions of not greater than 1.0 hPa at 275° C to obtain a polyester. This polyester was then made to undergo heat treatment for 19 hours under vacuum conditions of not greater than 1.0 hPa at 200° C, intrinsic viscosity of the polyester which was obtained being 0.95 (dl/g). Melting point of the polyester obtained was 230° C, the glass transition temperature thereof was 73° C, the crystallization temperature thereof when heated was 158° C, and the crystallization half-time thereof was 200 minutes.

Polyester Resin B

Polyethylene Terephthalate/Isophthalate (Ethylene Isophthalate Repeating Units 10 mol%; IV = 0.70)

88 parts by weight of terephthalic acid, 12 parts by weight of isophthalic acid, 82 parts by weight of ethylene glycol (ethylene glycol/total acid component molar ratio = 2.2), and, as measured as a fraction of the acid component, 0.05 mol% elemental Ge in the form of germanium oxide, and 0.05 mol% elemental Mg in the form of magnesium acetate were loaded into a reaction apparatus comprising an inlet port, thermometer, pressure gauge, fractionating column with distillation tower, and agitator blades, nitrogen was introduced thereinto while agitation was carried out, pressure within the system was maintained at 0.3 MPa, and the esterification reaction was carried out at a temperature of 230° C to 250° C while any water generated was distilled off from the system. Following completion of the reaction, 0.04 mol% of P in the form of trimethyl phosphate was added thereto at 250° C, pressure was gradually lowered while temperature was increased, and the polycondensation reaction was carried out under vacuum conditions of not greater than 1.0 hPa at 275° C to obtain a polyester. This polyester was then made to undergo heat treatment for 13 hours under vacuum conditions of not greater than 1.0 hPa at 200° C, intrinsic viscosity of the polyester which was obtained being 0.70 (dl/g). Melting point of the polyester obtained was 230° C, the glass transition temperature thereof was 73° C, the crystallization temperature thereof when heated was 155° C, and the crystallization half-time thereof was 100 minutes.

Polyester Resin C

Polyethylene Terephthalate/Isophthalate (Ethylene Isophthalate Repeating Units 5 mol%; IV = 0.95)

94 parts by weight of terephthalic acid, 6 parts by weight of isophthalic acid, 82 parts by weight of ethylene glycol (ethylene glycol/total acid component molar ratio = 2.2), and, as measured as a fraction of the acid component, 0.06 mol% elemental Sb in the form of antimony trioxide, and 0.05 mol% elemental Mg in the form of magnesium acetate were loaded into a reaction apparatus comprising an inlet port, thermometer, pressure gauge, fractionating column with distillation tower, and agitator blades, nitrogen was introduced thereinto while agitation was carried out, pressure within the system was maintained at 0.3 MPa, and the esterification reaction was carried out at a temperature of 230° C to 250° C while any water generated was distilled off from the system. Following completion of the reaction, 0.04 mol% of P in the form of trimethyl phosphate was added thereto at 250° C, pressure was gradually lowered while temperature was increased, and the polycondensation reaction was carried out under vacuum conditions of not greater than 1.0 hPa at 275° C to obtain a polyester. This polyester was then made to undergo heat treatment for 19 hours under vacuum conditions of not greater than 1.0 hPa at 200° C, intrinsic viscosity of the polyester which was obtained being 0.95 (dl/g). Melting point of the polyester obtained was 240° C, the glass transition temperature thereof was 76° C, the crystallization temperature thereof when heated was 140° C, and the crystallization half-time thereof was 50 minutes.

Polyester Resin D

Sebacic Acid Copolymerized Polyethylene Terephthalate-Type Resin (Fractional Amount of Sebacic-Acid-Derived Component Copolymerized with Carboxylic-Acid-Derived Component = 10 mol%; IV = 0.90)

88 parts by weight of terephthalic acid, 12 parts by weight of sebacic acid, 82 parts by weight of ethylene glycol (ethylene glycol/total acid component molar ratio = 2.2), and, as measured as a fraction of the acid component, 0.05 mol% elemental Ge in the form of germanium oxide, and 0.05 mol% elemental Mg in the form of magnesium acetate were loaded into a reaction apparatus comprising an inlet port, thermometer, pressure gauge, fractionating column with distillation tower, and agitator blades, nitrogen was introduced thereinto while agitation was carried out, pressure within the system was maintained at 0.3 MPa, and the esterification reaction was carried out at a temperature of 230° C to 250° C while any water generated was distilled off from the system. Following completion of the reaction, 0.04 mol% of P in the form of trimethyl phosphate was added thereto at 250° C, pressure was gradually lowered while temperature was increased, and the polycondensation reaction was carried out under vacuum conditions of not greater than 1.0 hPa at 275° C to obtain a polyester. This polyester was then made to undergo heat treatment for 18 hours under vacuum conditions of not greater than 1.0 hPa at 195° C, intrinsic viscosity of the polyester which was obtained being 0.90 (dl/g). Melting point of the polyester obtained was 232° C, the glass transition temperature thereof was 63° C, the crystallization temperature thereof when heated was 124° C, and the crystallization half-time thereof was 300 minutes.

Polyester Resin E

Sebacic Acid Copolymerized Polyethylene Terephthalate-Type Resin (Fractional Amount of Sebacic-Acid-Derived Component Copolymerized with Carboxylic-Acid-Derived Component = 18 mol%; IV = 0.75)

80 parts by weight of terephthalic acid, 20 parts by weight of sebacic acid, 82 parts by weight of ethylene glycol (ethylene glycol/total acid component molar ratio = 2.2), and, as measured as a fraction of the acid component, 0.05 mol% elemental Ge in the form of germanium oxide, and 0.05 mol% elemental Mg in the form of magnesium acetate were loaded into a reaction apparatus comprising an inlet, thermometer, pressure gauge, fractionating column with distillation tower, and agitator blades, nitrogen was introduced thereinto while agitation was carried out, pressure within the system was maintained at 0.3 MPa, and the esterification reaction was carried out at a temperature of 230° C to 250° C while any water generated was distilled off from the system. Following completion of the reaction, 0.04 mol% of P in the form of trimethyl phosphate was added thereto at 250° C, pressure was gradually lowered while temperature was increased, and the polycondensation reaction was carried out under vacuum conditions of not greater than 1.0 hPa at 275° C to obtain a polyester. This polyester was then made to undergo heat treatment for 15 hours under vacuum conditions of not greater than 1.0 hPa at 195° C, intrinsic viscosity of the polyester which was obtained being 0.75 (dl/g). Melting point of the polyester obtained was 205° C, the glass transition temperature thereof was 45° C, the crystallization temperature thereof when heated was 142° C, and the crystallization half-time thereof was 700 minutes.

Polyester Resin F

Sebacic Acid Copolymerized Polyethylene Terephthalate/Isophthalate (Fractional Amount of Sebacic-Acid-Derived Component Copolymerized with Carboxylic-Acid-Derived Component = 5 mol%; Ethylene Isophthalate Repeating Units 10 mol%; IV = 0.95)

82 parts by weight of terephthalic acid, 6 parts by weight of sebacic acid, 12 parts by weight of isophthalic acid, 82 parts by weight of ethylene glycol (ethylene glycol/total acid component molar ratio = 2.2), and, as measured as a fraction of the acid component, 0.06 mol% elemental Sb in the form of antimony trioxide, and 0.05 mol% elemental Mg in the form of magnesium acetate were loaded into a reaction apparatus comprising an inlet port, thermometer, pressure gauge, fractionating column with distillation tower, and agitator blades, nitrogen was introduced thereinto while agitation was carried out, pressure within the system was maintained at 0.3 MPa, and the esterification reaction was carried out at a temperature of 230° C to 250° C while any water generated was distilled off from the system. Following completion of the reaction, 0.04 mol% of P in the form of trimethyl phosphate was added thereto at 250° C, pressure was gradually lowered while temperature was increased, and the polycondensation reaction was carried out under vacuum conditions of not greater than 1.0 hPa at 275° C to obtain a polyester.
This polyester was then made to undergo heat treatment for 19 hours under vacuum conditions of not greater than 1.0 hPa at 200° C, intrinsic viscosity of the polyester which was obtained being 0.95 (dl/g). Melting point of the polyester obtained was 205° C, the glass transition temperature thereof was 48° C, the crystallization temperature thereof when heated was 158° C, and the crystallization half-time thereof was 800 minutes.

Polyester Resin G

Polyethylene Terephthalate/Isophthalate (Ethylene Isophthalate Repeating Units 12 mol%; IV = 0.65)

86 parts by weight of terephthalic acid, 14 parts by weight of isophthalic acid, 82 parts by weight of ethylene glycol (ethylene glycol/total acid component molar ratio = 2.2), and, as measured as a fraction of the acid component, 0.05 mol% elemental Ge in the form of germanium oxide, and 0.05 mol% elemental Mg in the form of magnesium acetate were loaded into a reaction apparatus comprising an inlet port, thermometer, pressure gauge, fractionating column with distillation tower, and agitator blades, nitrogen was introduced thereinto while agitation was carried out, pressure within the system was maintained at 0.3 MPa, and the esterification reaction was carried out at a temperature of 230° C to 250° C while any water generated was distilled off from the system. Following completion of the reaction, 0.04 mol% of P in the form of trimethyl phosphate was added thereto at 250° C, pressure was gradually lowered while temperature was increased, and the polycondensation reaction was carried out under vacuum conditions of not greater than 1.0 hPa at 275° C to obtain a polyester. This polyester was then made to undergo heat treatment for 12 hours under vacuum conditions of not greater than 1.0 hPa at 200° C, intrinsic viscosity of the polyester which was obtained being 0.65 (dl/g). Melting point of the polyester obtained was 229° C, the glass transition temperature thereof was 73° C, and the crystallization half-time thereof was 100 minutes.

Polyester Resin H

Polyethylene Terephthalate (IV = 0.62)

Intrinsic viscosity of said polyester was 0.62 (dl/g), melting point thereof was 256° C, the glass transition temperature thereof was 78° C, the crystallization temperature thereof when heated was 130° C, and the crystallization half-time thereof was 1 minute.

Polyester Resin I

Polylactic Acid Resin (Luminy (R) PAL L175; Manufactured by Total Corbion)

The melt flow index of said polyester was 8 (g/10 min) under conditions of 210° C/2.16 kg, the melting point thereof was 173° C, the glass transition temperature thereof was 55° C, the crystallization temperature thereof when heated was 135° C, the crystallization half-time thereof was 4 minutes, and the fractional amount of L-lactide thereof was 99.5%.

Polyester Resin J

Polylactic Acid Resin (Luminy (R) PAL LX175; Manufactured by Total Corbion)

The melt flow index of said polyester was 8 (g/10 min) under conditions of 210° C/2.16 kg, the melting point thereof was 150° C, the glass transition temperature thereof was 53° C, the crystallization temperature thereof when heated was 121° C, the crystallization half-time thereof was 330 minutes, and the fractional amount of L-lactide thereof was 96%.

Polyester Resin K

Polyethylene Terephthalate-Type Copolymerized Polyester Resin (Vylon RV30P; Manufactured by Toyobo Co., Ltd.)

Melting point of said polyester resin was 130° C, and Tg thereof was -30° C.

Polyester Resin L

Adipic Acid Copolymerized Butylene Terephthalate Resin (Ecoflex; Manufactured by BASF)

Melting point of said polyester resin was 210° C, and Tg thereof was 25° C.

Polyester Resin M

Polybutylene Succite Resin (FZ91PM; Manufactured by Mitsubishi Chemical Corporation)

The melt flow index of said polyester was 5 g/10 min, Tm thereof was 115° C, and Tg thereof was -22° C. Furthermore, this resin was manufactured from raw materials derived from plants.

Working Example 1

Polyester Resin A was vacuum dried (1 Torr) for 6 hours at 135° C, and was thereafter supplied to an extruder. The raw material which was supplied to the extruder was such that the resin temperature thereof at the melting region, kneading region, plumbing, gear pump, and to as far as the filter of the extruder was 280° C, and this was made to be 275° C at the subsequent plumbing and T die, this being melt extruded in sheet-like fashion from the T die and being cooled at a cooling roller at 40° C to obtain an amorphous sheet. Said sheet was stretched in the machine direction by a factor of 3.5x at 105° C. Following stretching in the machine direction, the film was then guided to a tenter, where it was preheated at 140° C, stretched in the transverse direction by a factor of 6.0x at 150° C, thereafter made to undergo heat treatment at 215° C, and was subjected to 7% relaxation treatment to obtain biaxially stretched polyester film of thickness 12 μm. Stretching characteristics of the film that was obtained were satisfactory, and it had excellent heat resistance and impact strength.

Working Example 2

Except for the fact that Polyester Resin B was used, a similar method as at Working Example 1 was employed to obtain an amorphous sheet.

Said sheet was stretched in the machine direction by a factor of 3.0x at 105° C. Following stretching in the machine direction, the film was then heated at 100° C for 1 second and was thereafter guided to a tenter, where it was preheated at 140° C, stretched in the transverse direction by a factor of 6.0x at 150° C, thereafter made to undergo heat treatment at 210° C, and was subjected to 10% relaxation treatment to obtain biaxially stretched polyester film of thickness 12 $\mu$m. Stretching characteristics of the film that was obtained were satisfactory, and it had excellent heat resistance and impact strength.

Working Example 3

Except for the fact that Polyester Resin C was used, a similar method as at Working Example 1 was employed to obtain an amorphous sheet.

Said sheet was stretched in the machine direction by a factor of 3.0x at 105° C. Following stretching in the machine direction, the film was then heated at 100° C for 1 second and was thereafter guided to a tenter, where it was preheated at 110° C, stretched in the transverse direction by a factor of 4.5x at 120° C, thereafter made to undergo heat treatment at 210° C, and was subjected to 10% relaxation treatment to obtain biaxially stretched polyester film of thickness 15 $\mu$m. Stretching characteristics of the film that was obtained were satisfactory, and it had excellent heat resistance and impact strength.

Working Example 4

Except for the fact that Polyester Resin D was used, a similar method as at Working Example 1 was employed to obtain an amorphous sheet.

Said sheet was stretched in the machine direction by a factor of 3.0x at 80° C. Following stretching in the machine direction, the film was then guided to a tenter, where it was preheated at 130° C, stretched in the transverse direction by a factor of 6.0x at 140° C, thereafter made to undergo heat treatment at 200° C, and was subjected to 7% relaxation treatment to obtain biaxially stretched polyester film of thickness 16 $\mu$m. Stretching characteristics of the film that was obtained were satisfactory, and it had excellent heat resistance and impact strength.

Working Example 5

Except for the fact that Polyester Resin E was used, a similar method as at Working Example 1 was employed to obtain an amorphous sheet.

Said sheet was stretched in the machine direction by a factor of 3.5x at 70° C. Following stretching in the machine direction, the film was then heated at 100° C for 1 second and was thereafter guided to a tenter, where it was preheated at 90° C, stretched in the transverse direction by a factor of 6.0x at 100° C, thereafter made to undergo heat treatment at 190° C, and was subjected to 7% relaxation treatment to obtain biaxially stretched polyester film of thickness 12 $\mu$m. Stretching characteristics of the film that was obtained were satisfactory, and it had excellent heat resistance and impact strength.

Working Example 6

Except for the fact that Polyester Resin F was used, a similar method as at Working Example 1 was employed to obtain an amorphous sheet.

Said sheet was stretched in the machine direction by a factor of 3.0x at 60° C. Following stretching in the machine direction, the film was then guided to a tenter, where it was preheated at 140° C, stretched in the transverse direction by a factor of 7.5x at 150° C, thereafter made to undergo heat treatment at 190° C, and was subjected to 12% relaxation treatment to obtain biaxially stretched polyester film of thickness 15 $\mu$m. Stretching characteristics of the film that was obtained were satisfactory, and it had excellent heat resistance and impact strength.

Working Example 7

Except for the fact that Polyester Resin B was used, a similar method as at Working Example 1 was employed to obtain an amorphous sheet.

Said sheet was stretched in the machine direction by a factor of 3.5x at 105° C. Following stretching in the machine direction, the film was then guided to a tenter, where it was preheated at 160° C, stretched in the transverse direction by a factor of 6.0x at 170° C, thereafter made to undergo heat treatment at 200° C, and was subjected to 10% relaxation treatment to obtain biaxially stretched polyester film of thickness 15 $\mu$m. Stretching characteristics of the film that was obtained were satisfactory, and it had excellent heat resistance and impact strength.

Working Example 8

Using Polyester Resin I, this was vacuum dried (1 Torr) for 6 hours at 125° C, and was thereafter supplied to an extruder. The raw material which was supplied to the extruder was such that the resin temperature thereof at the melting region, kneading region, plumbing, gear pump, and to as far as the filter of the extruder was 220° C, and this was made to be 220° C at the subsequent plumbing and T die, this being melt extruded in sheet-like fashion from the T die and being cooled at a cooling roller at 40° C to obtain an amorphous sheet. Said sheet was stretched in the machine direction by a factor of 3.5x at 85° C. Following stretching in the machine direction, the film was then guided to a tenter, where it was preheated at 140° C, stretched in the transverse direction by a factor of 6.0x at 150° C, thereafter made to undergo heat treatment at 165° C, and was subjected to 10% relaxation treatment to obtain biaxially stretched polyester film of thickness 12 μm. Stretching characteristics of the film that was obtained were satisfactory, and it had excellent heat resistance and impact strength.

Working Example 9

Using Polyester Resin J, this was vacuum dried (1 Torr) for 6 hours at 125° C, and was thereafter supplied to an extruder. The raw material which was supplied to the extruder was such that the resin temperature thereof at the melting region, kneading region, plumbing, gear pump, and to as far as the filter of the extruder was 220° C, and this was made to be 220° C at the subsequent plumbing and T die, this being melt extruded in sheet-like fashion from the T die and being cooled at a cooling roller at 40° C to obtain an amorphous sheet. Said sheet was stretched in the machine direction by a factor of 4.5x at 85° C. Following stretching in the machine direction, the film was then guided to a tenter, where it was preheated at 135° C, stretched in the transverse direction by a factor of 6.0x at 140° C, thereafter made to undergo heat treatment at 140° C, and was subjected to 10% relaxation treatment to obtain biaxially stretched polyester film of thickness 12 μm. Stretching characteristics of the film that was obtained were satisfactory, and it had excellent heat resistance and impact strength.

Comparative Example 1

Using Polyester Resin A, a similar method as at Working Example 1 was employed to obtain an amorphous sheet.
The sheet was stretched in the machine direction by a factor of 3.0x at 105° C. Following stretching in the machine direction, the film was then guided to a tenter, where it was preheated at 90° C, stretched in the transverse direction by a factor of 4.0x at 100° C, thereafter made to undergo heat treatment at 200° C, and was subjected to 5% relaxation treatment to obtain biaxially stretched polyester film of thickness 20 μm. Although stretching characteristics of the film that was obtained were satisfactory, it had inferior heat resistance.

Comparative Example 2

Using Polyester Resin E, a similar method as at Working Example 1 was employed to obtain an amorphous sheet.
Said sheet was stretched in the machine direction by a factor of 3.0x at 70° C. Following stretching in the machine direction, the film was then guided to a tenter, where it was preheated at 65° C, stretched in the transverse direction by a factor of 4.0x at 70° C, thereafter made to undergo heat treatment at 170° C, and was subjected to 5% relaxation treatment to obtain biaxially stretched polyester film of thickness 20 μm. Although stretching characteristics of the film that was obtained were satisfactory, it had inferior heat resistance.

Comparative Example 3

Using Polyester Resin E, a similar method as at Working Example 1 was employed to obtain an amorphous sheet.
Said sheet was stretched in the machine direction by a factor of 3.0x at 70° C. Following stretching in the machine direction, the film was then guided to a tenter, where it was preheated at 65° C and stretched in the transverse direction by a factor of 6.0x at 70° C, whereupon it fractured while within the tenter, making it impossible to obtain a sample.

Comparative Example 4

Using Polyester Resin G, a similar method as at Working Example 1 was employed to obtain an amorphous sheet.

Said sheet was stretched in the machine direction by a factor of 3.0x at 100° C. Following stretching in the machine direction, the film was then guided to a tenter, where it was stretched in the transverse direction by a factor of 3.1x at 110° C, thereafter made to undergo heat treatment at 180° C, and was subjected to 5% relaxation treatment to obtain biaxially stretched polyester film of thickness 20 μm. Although stretching characteristics of the film that was obtained were satisfactory, it had inferior heat resistance and impact strength.

Comparative Example 5

Using Polyester Resin H, a similar method as at Working Example 1 was employed to obtain an amorphous sheet.
Said sheet was stretched in the machine direction by a factor of 3.0x at 105° C. Following stretching in the machine direction, the film was then heated at 100° C for 1 second and was thereafter guided to a tenter, where it was stretched in the transverse direction by a factor of 6.0x at 160° C, thereafter made to undergo heat treatment at 230° C, and was subjected to 7% relaxation treatment to obtain biaxially stretched polyester film of thickness 15 μm. Although stretching characteristics of the film that was obtained were satisfactory, it had inferior impact strength.

Comparative Example 6

Except for the fact that at what would correspond to the tenter operation of Working Example 1 preheating was carried out at 175° C and the subsequent stretching in the transverse direction was carried out at 185° C, a similar method as at Working Example 1 was employed, but fracture occurred while within the tenter, making it impossible to obtain a sample.
Conditions for formation of biaxially oriented polyester films and results of evaluation of the properties of the films obtained are shown at TABLE 1 for Working Examples 1 through 9 and Comparative Examples 1 through 6.

Reference Example 1-1

[1] Production of Laminated Biaxially Oriented Polyester Film

Polyester Resin A was vacuum dried (1 Torr) for 6 hours at 135° C. Polyester Resin A was thereafter supplied to Extruder 1; and following dry blending of 50 parts by weight of Polyester Resin A and 50 parts by weight of Polyester Resin K, this was supplied to Extruder 2.
At each of the two extruders, the resin temperature thereof at the melting region, kneading region, plumbing, gear pump, and to as far as the filter was 280° C, and this was made to be 275° C at the subsequent plumbing and T die, these being melt coextruded in sheet-like fashion from the T die and being cooled at a cooling roller at 40° C to obtain an amorphous sheet in which there were two layers, these being of two types. Extrusion amount and casting speed were adjusted to cause the thickness of the resin at Extruder 1 and the thickness of the resin at Extruder 2 to respectively be 200 μm and 100 μm.
Said sheet was stretched in the machine direction by a factor of 3.5x at 105° C. Following stretching in the machine direction, the film was then guided to a tenter, where it was preheated at 140° C, stretched in the transverse direction by a factor of 6.0x at 150° C, thereafter made to undergo heat treatment at 215° C, and was subjected to 7% relaxation treatment to obtain biaxially stretched polyester film for which the total film thickness was 15 μm. The resin layer from Extruder 2 was used as heat seal layer. There was a 50° C difference in melting point between Extruder 1 and Extruder 2. Thickness of the sealing layer was 5 μm.
Stretching characteristics of the film that was obtained were satisfactory, and it had excellent heat resistance and impact strength. Furthermore, the film which was obtained was used as lid material for a container to fabricate a sealed container as follows. A satisfactory sealed container was obtained, there being no leakage of air or the like. Recyclability thereof was also satisfactory.

[2] Container Fabrication

First, the resin used as Working Example 1 was employed to obtained a sheet of thickness 300 μm from a sheeting machine. At the sheeting machine, note that touch roller diameter was 20 cm, and chill roller diameter was 50 cm; resin extrusion amount was 50 kg/hr, this being the total of the amounts extruded at the respective layers, per 1 m of machine width. Furthermore, roller rotational speed was different each time.
Next, a TVP-33 Vacuum and Pressure Forming Machine manufactured by Sanwa Kogyo with a die having a mirror finish was used to obtain a tray container of fillable capacity 320 cc from the 300-μm sheet that was obtained. Note that this was carried out such that barrel temperature conditions during sheet forming were such that in all cases this was set to 290° C, sheet preheating conditions during container forming were such that in all cases this was set to 90% heater output, die temperature conditions during container forming were such that in all cases this was set to 180° C, and heating time during container forming were such that in all cases this was set to 10.5 sec.

[3] Container Sealing Treatment

[1] Using the laminated axially oriented polyester film which was obtained as lid material, an SN1-N2 Pack Sealer manufactured by Shinwa Kikai Co., Ltd., was used to seal this to obtain a sealed container. Heat sealing treatment conditions were as follows.

Heat seal temperature: 180° C
Heat seal pressure: 0.5 MPa
Heat seal time: 1.0 second

[4] Evaluation of Container Sealing Characteristics and of Sealed Contained Obtained

Evaluation of the sealing characteristics of the container and of the sealed container that was obtained were carried out as follows. At each of the items that were evaluated, those determined to be either GOOD or FAIR were able to withstand practical use.

(1) Container Sealing Characteristics
The lid material was attached, and the status of the lamination at the location of the seal at the sealed container was ascertained.

GOOD = Uniformly adhering
FAIR = Partial wrinkling or the like; nonuniform location(s) observed
BAD = Nonadhering location(s) observed

(2) Evaluation of Seal Integrity at Sealed Container
The lid material was attached, a board was placed above the sealed container, a weight being placed thereon sufficient to produce 20 g/cm$^2$ at the container bottom, and this was allowed to stand for 30 minutes, following which whether air or the like had leaked out therefrom was ascertained.

GOOD = No change observed
FAIR = Leakage of air observed
BAD = Lid delaminated therefrom

(3) Recyclability of Sealed Container
The lid material was attached, scissors were used to cut 10 g from the sealed container, and this was placed in a test tube. This was melted for 30 minutes while agitating in a bath at 300° C in a nitrogen atmosphere. This was thereafter removed from the test tube, spread out so as to be of thickness on the order of 100 $\mu$m, and cooled to room temperature, following which the transparency thereof was evaluated.

GOOD = Transparency was high
FAIR = Some turbidity observed
BAD = Transparency was low

Reference Example 1-2

Polyester Resin A was vacuum dried (1 Torr) for 6 hours at 135° C. Polyester Resin A was thereafter supplied to Extruder 1; and following dry blending of 55 parts by weight of Polyester Resin A and 45 parts by weight of Polyester Resin L, this was supplied to Extruder 2.

At each of the two extruders, the resin temperature thereof at the melting region, kneading region, plumbing, gear pump, and to as far as the filter was 280° C, and this was made to be 275° C at the subsequent plumbing and T die, these being melt coextruded in sheet-like fashion from the T die so as to cause the resin from Extruder 1 to be toward the chill roller, and being cooled at the chill roller at 40° C to obtain an amorphous sheet in which there were two layers, these being of two types. Extrusion amount and casting speed were adjusted to cause the thickness of the resin at Extruder 1 and the thickness of the resin at Extruder 2 to respectively be 240 $\mu$m and 60 $\mu$m.

Said sheet was stretched in the machine direction by a factor of 3.5x at 105° C. Following stretching in the machine direction, the film was then guided to a tenter, where it was preheated at 140° C, stretched in the transverse direction by a factor of 6.0x at 150° C, thereafter made to undergo heat treatment at 215° C, and was subjected to 7% relaxation treatment to obtain biaxially stretched polyester film for which the total film thickness was 16 $\mu$m. The resin layer from Extruder 2 was used as sealing layer. There was a 45° C difference in melting point between Extruder 1 and Extruder 2. Thickness of the sealing layer was 3 $\mu$m.

Stretching characteristics of the film that was obtained were satisfactory, and it had excellent heat resistance and impact strength. Furthermore, the film which was obtained was used as lid material for a container to fabricate a sealed container in similar fashion as at Reference Example 1-1. A satisfactory sealed container was obtained, there being no leakage of air or the like. Recyclability thereof was also satisfactory.

Reference Example 1-3

Bioethylene glycol (manufactured by Indiana Glycol) derived from plants was used instead of ethylene glycol derived from fossil fuels at what otherwise was as at manufacture of Polyester Resin A to obtain a polyester which was similar thereto. This polyester resin is referred to as Polyester Resin Bio A. Polyester Resin Bio A was vacuum dried (1 Torr) for 6 hours at 135° C. Polyester Resin Bio A was thereafter supplied to Extruder 1; and following dry blending of 55 parts by weight of Polyester Resin Bio A and 45 parts by weight of Polyester Resin M, this was supplied to Extruder 2.

At each of the two extruders, the resin temperature thereof at the melting region, kneading region, plumbing, gear pump, and to as far as the filter was 280° C, and this was made to be 275° C at the subsequent plumbing and T die, these being melt coextruded in sheet-like fashion from the T die so as to cause the resin from Extruder 1 to be toward the chill roller, and being cooled at the chill roller at 40° C to obtain an amorphous sheet in which there were two layers, these being of two types. Extrusion amount and casting speed were adjusted to cause the thickness of the resin at Extruder 1 and the thickness of the resin at Extruder 2 to respectively be 240 $\mu$m and 60 $\mu$m.

Said sheet was stretched in the machine direction by a factor of 3.5x at 105° C. Following stretching in the machine direction, the film was then guided to a tenter, where it was preheated at 140° C, stretched in the transverse direction by a factor of 6.0x at 150° C, thereafter made to undergo heat treatment at 215° C, and was subjected to 7% relaxation treatment to obtain biaxially stretched polyester film for which the total film thickness was 18 $\mu$m. The resin layer from Extruder 2 was used as sealing layer. There was a 40° C difference in melting point between Extruder 1 and Extruder 2. Thickness of the sealing layer was 3 $\mu$m.

Stretching characteristics of the film that was obtained were satisfactory, and it had excellent heat resistance and impact strength. Furthermore, the film which was obtained was used as lid material for a container to fabricate a sealed container in similar fashion as at Reference Example 1-1. A satisfactory sealed container was obtained, there being no leakage of air or the like. Recyclability thereof was also satisfactory.

Reference Example 1-4

Polyester Resin A was vacuum dried (1 Torr) for 6 hours at 135° C. Polyester Resin A was thereafter supplied to Extruder 1; and following dry blending of 55 parts by weight of Polyester Resin A and 45 parts by weight of Polyester Resin M, this was supplied to Extruder 2.

At each of the two extruders, the resin temperature thereof at the melting region, kneading region, plumbing, gear pump, and to as far as the filter was 280° C, and this was made to be 275° C at the subsequent plumbing and T die, these being melt coextruded in sheet-like fashion from the T die so as to cause the resin from Extruder 1 to be toward the chill roller, and being cooled at the chill roller at 40° C to obtain an amorphous sheet in which there were two layers, these being of two types. Extrusion amount and casting speed were adjusted to cause the thickness of the resin at Extruder 1 and the thickness of the resin at Extruder 2 to respectively be 240 $\mu$m and 3 $\mu$m.

Said sheet was stretched in the machine direction by a factor of 3.5x at 105° C. Following stretching in the machine direction, the film was then guided to a tenter, where it was preheated at 140° C, stretched in the transverse direction by a factor of 6.0x at 150° C, thereafter made to undergo heat treatment at 215° C, and was subjected to 7% relaxation treatment to obtain biaxially stretched polyester film for which the total film thickness was 12 $\mu$m. The resin layer from Extruder 2 was used as sealing layer. There was a 40° C difference in melting point between Extruder 1 and Extruder 2. Thickness of the sealing layer was 0.1 $\mu$m.

Stretching characteristics of the film that was obtained were satisfactory, and it had excellent heat resistance and impact strength. Furthermore, the film which was obtained was used as lid material for a container to fabricate a sealed container in similar fashion as at Reference Example 1-1, but application of load from weight caused occurrence of leakage of air. Recyclability was satisfactory.

Reference Example 1-5

Polyester Resin A was vacuum dried (1 Torr) for 6 hours at 135° C. Polyester Resin Bio A was thereafter supplied to Extruder 1; and following dry blending of 55 parts by weight of Polyester Resin A and 45 parts by weight of Polyester Resin M, this was supplied to Extruder 2.

At each of the two extruders, the resin temperature thereof at the melting region, kneading region, plumbing, gear pump, and to as far as the filter was 280° C, and this was made to be 275° C at the subsequent plumbing and T die, these being melt coextruded in sheet-like fashion from the T die so as to cause the resin from Extruder 1 to be toward the chill roller, and being cooled at the chill roller at 40° C to obtain an amorphous sheet in which there were two layers, these being of two types. Extrusion amount and casting speed were adjusted to cause the thickness of the resin at Extruder 1 and the thickness of the resin at Extruder 2 to respectively be 150 $\mu$m and 150 $\mu$m.

Said sheet was stretched in the machine direction by a factor of 3.5x at 105° C. Following stretching in the machine direction, the film was then guided to a tenter, where it was preheated at 140° C, stretched in the transverse direction by a factor of 6.0x at 150° C, thereafter made to undergo heat treatment at 215° C, and was subjected to 7% relaxation treatment to obtain biaxially stretched polyester film for which the total film thickness was 30 $\mu$m. The resin layer from Extruder 2 was used as sealing layer. There was a 40° C difference in melting point between Extruder 1 and Extruder 2. Thickness of the sealing layer was 15 $\mu$m.

Stretching characteristics of the film that was obtained were satisfactory, and it had excellent heat resistance and impact strength. Furthermore, the film which was obtained was used as lid material for a container to fabricate a sealed container in similar fashion as at Reference Example 1-1. Whereas a satisfactory sealed container was obtained, there being no leakage of air or the like, recyclability thereof was however poor, as cloudiness was observed during recycling.

Conditions for formation of laminated biaxially oriented polyester films and results of evaluation of the properties of the films obtained are shown at TABLE 2 and TABLE 3 for Reference Examples 1-1 through 1-5.

TABLE 1

| | Property | Unit | Working Example 1 | Working Example 2 | Working Example 3 | Working Example 4 | Working Example 5 | Working Example 6 | Working Example 7 | Working Example 8 | Working Example 9 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|---|
| Polyester resin | Raw material type | -- | A | B | C | D | E | F | B | I | J | A | B | E | G | H | A |
| | Copolymeric composition | -- | IPA | IPA | IPA | SA | SA | IPA+AA | IPA | None | None | IPA | SA | SA | IPA | None | IPA |
| | Fractional amount of copolymerized component(s) in composition | mol% | 10 | 10 | 5 | 10 | 18 | 5+10 | 10 | 0 | 0 | 10 | 18 | 18 | 12 | 0 | 10 |
| | Viscosity | dL/g | 0.95 | 0.7 | 0.95 | 0.9 | 0.75 | 0.95 | 0.7 | 8g/min *4 | 6g/min *4 | 0.95 | 0.75 | 0.75 | 0.65 | 0.62 | 0.95 |
| | Glass transition temperature (Tg) | °C | 73 | 73 | 76 | 63 | 45 | 48 | 73 | 55 | 53 | 73 | 45 | 45 | 73 | 78 | 73 |
| | Melting point (Tm) | °C | 230 | 230 | 240 | 232 | 205 | 205 | 230 | 173 | 150 | 230 | 205 | 205 | 229 | 256 | 230 |
| | Crystallization temperature when heated (Tc) | °C | 158 | 155 | 140 | 124 | 142 | 158 | 155 | 135 | 121 | 158 | 142 | 142 | 158 | 130 | 158 |
| | Tc - (Tg + Tm)/2 | °C | 6.5 | 3.5 | -18 | -23.5 | 17 | 31.5 | 3.5 | 21 | 20 | 6.5 | 17 | 17 | 7 | -37 | 6.5 |
| | Crystallization half-time | minutes | 200 | 100 | 50 | 300 | 700 | 800 | 100 | 4 | 330 | 200 | 700 | 700 | 200 | 1 | 200 |
| Extrusion cooling | Melt region temperature | °C | 280 | 280 | 280 | 280 | 280 | 280 | 280 | 220 | 220 | 280 | 280 | 280 | 280 | 280 | 280 |
| | T die temperature | °C | 275 | 275 | 275 | 275 | 275 | 275 | 275 | 220 | 220 | 275 | 275 | 275 | 275 | 275 | 275 |
| | Cooling temperature | °C | 20 | 20 | 20 | 20 | 20 | 20 | 20 | 20 | 20 | 20 | 20 | 20 | 20 | 20 | 20 |
| Stretching in machine direction | Stretching temperature | °C | 105 | 105 | 105 | 80 | 70 | 60 | 105 | 85 | 85 | 105 | 70 | 70 | 100 | 105 | 105 |
| | Stretching ratio | -- | 3.5 | 3 | 3 | 3 | 3.5 | 3 | 3.5 | 3.5 | 4.5 | 3 | 3 | 3 | 3 | 3 | 3.5 |
| | Heat treatment | °C | None | 100 | 100 | None | 90 | None | None | None | None | None | None | None | None | None | None |
| | Stretching temperature - Tg | °C | 32 | 32 | 29 | 17 | 25 | 12 | 32 | 30 | 32 | 32 | 25 | 25 | 27 | 27 | 32 |
| | **Birefringence (Δnx)** | -- | 0.068 | 0.073 | 0.08 | 0.051 | 0.052 | 0.045 | 0.081 | 0.013 | 0.012 | 0.061 | 0.048 | 0.048 | 0.072 | 0.085 | 0.068 |
| Stretching in transverse direction | Preheating temperature | °C | 140 | 140 | 110 | 130 | 90 | 140 | 160 | 140 | 135 | 90 | 65 | 65 | None | None | 140 |
| | Stretching temperature | °C | 150 | 150 | 120 | 140 | 100 | 150 | 170 | 150 | 140 | 100 | 70 | 70 | 110 | 160 | 185 |
| | Stretching ratio | -- | 6 | 6 | 4.5 | 6 | 6 | 7.5 | 6 | 6 | 6 | 4 | 4 | 6 | 3.1 | 6 | 6 |
| | Stretching temperature - Tc | °C | -8 | -5 | -20 | 16 | -42 | -8 | 15 | 15 | 19 | -58 | -72 | -72 | -48 | 30 | 27 |
| | Stretching characteristics | EXCELLENT, GOOD, BAD | EXCELLENT | EXCELLENT | EXCELLENT | EXCELLENT | EXCELLENT | EXCELLENT | EXCELLENT | EXCELLENT | GOOD | EXCELLENT | EXCELLENT | BAD (fracture) | EXCELLENT | EXCELLENT | BAD (fracture) |
| Heat setting | Heat setting temperature | °C | 215 | 210 | 210 | 200 | 190 | 190 | 200 | 165 | 140 | 200 | 170 | -- | 180 | 230 | -- |
| | Percent relaxation | % | 7 | 10 | 10 | 7 | 7 | 12 | 10 | 10 | 10 | 5 | 5 | -- | 5 | 7 | -- |
| | Heat setting temperature - Tm | °C | -15 | -20 | -30 | -32 | -15 | -15 | -30 | -8 | -10 | -30 | -35 | -- | -49 | -26 | -- |
| Change in film properties due to heat setting | Plane orientation coefficient before heat setting | -- | 0.110 | 0.120 | 0.120 | 0.081 | 0.063 | 0.075 | 0.105 | 0.013 | 0.012 | 0.100 | 0.060 | -- | 0.095 | 0.150 | -- |
| | Plane orientation coefficient after heat setting | -- | 0.131 | 0.145 | 0.155 | 0.120 | 0.090 | 0.095 | 0.136 | 0.014 | 0.013 | 0.140 | 0.105 | -- | 0.117 | 0.173 | -- |
| | **Change in plane orientation coefficient (ΔP)** | -- | 0.021 | 0.025 | 0.035 | 0.039 | 0.027 | 0.020 | 0.031 | 0.001 | 0.001 | 0.040 | 0.045 | -- | 0.022 | 0.023 | -- |
| | Density before heat setting | g/cm³ | 1.374 | 1.373 | 1.374 | 1.373 | 1.360 | 1.369 | 1.379 | -- | -- | 1.363 | 1.361 | -- | 1.363 | 1.384 | -- |
| | Density after heat setting | g/cm³ | 1.379 | 1.381 | 1.382 | 1.377 | 1.369 | 1.371 | 1.383 | -- | -- | 1.381 | 1.375 | -- | 1.376 | 1.388 | -- |
| | Change in density | g/cm³ | 0.005 | 0.008 | 0.008 | 0.004 | 0.009 | 0.002 | 0.004 | 0.001 | 0.001 | 0.018 | 0.014 | -- | 0.013 | 0.004 | -- |
| Film properties | Film viscosity | dL/g | 0.8 | 0.65 | 0.8 | 0.7 | 0.65 | 0.8 | 0.65 | 10g/min *4 | 8g/min *4 | 0.8 | 0.65 | -- | 0.6 | 0.6 | -- |
| | Thermal shrinkage in machine direction at 150° C | % | 2.9 | 1.5 | 2.8 | 1.8 | 2.1 | 2.8 | 3.0 | 2.6 *1 | 3.0 *1 | 4.7 | 8.2 | -- | 3.5 | 1.0 | -- |
| | Thermal shrinkage in transverse direction at 150° C | % | 2.3 | 1.2 | 2.5 | 1.4 | 1.8 | 2.5 | 2.6 | 2.4 *1 | 2.6 *1 | 4.5 | 6.8 | -- | 3.3 | 0.6 | -- |
| | Maximum shrinkage stress in machine direction | MPa | 2.5 | 3.2 | 3.2 | 2.7 | 2.2 | 2.5 | 2.3 | 2.8 | 2.6 | 3.8 | 3.6 | -- | 4.1 | 2.0 | -- |
| | Impact strength | J/12 μm | 0.9 | 0.5 | 1.0 | 0.7 | 0.7 | 0.8 | 0.6 | 0.5 | 0.6 | 0.8 | 0.6 | -- | 0.4 | 0.4 | -- |
| | Suitability for printing treatment | EXCELLENT, GOOD, BAD | EXCELLENT | GOOD | GOOD | EXCELLENT | EXCELLENT | EXCELLENT | EXCELLENT | GOOD *2 | GOOD | GOOD | GOOD | -- | BAD | EXCELLENT | -- |
| | Suitability for undergoing working | EXCELLENT, GOOD, BAD | EXCELLENT | EXCELLENT | GOOD | EXCELLENT | EXCELLENT | EXCELLENT | EXCELLENT | GOOD | GOOD *2 | BAD | BAD | -- | BAD | EXCELLENT | -- |
| | Bag breakage properties | EXCELLENT, GOOD, BAD | EXCELLENT | GOOD | GOOD | EXCELLENT | EXCELLENT | EXCELLENT | EXCELLENT | GOOD | GOOD | GOOD | GOOD | -- | BAD | EXCELLENT | -- |

*1 Thermal shrinkage when subjected to heat treatment for 30 minutes at 120°C
*2 Evaluated for situation where heat seal temperature was 125°C
*3 Relationship to substrate composition, properties, and conditions is shown
*4 Melt flow index (210° C, 2.16 kg) used as alternative index of viscosity
*5 Viscosity at substrate side of film

TABLE 2

| | | | | Reference Example 1-1 | Reference Example 1-2 | Reference Example 1-3 | Reference Example 1-4 | Reference Example 1-5 |
|---|---|---|---|---|---|---|---|---|
| Polyester resin | | Raw material type | -- | A | A | Bio A | A | A |
| | | Copolymeric composition | -- | IPA | IPA | IPA | IPA | IPA |
| | | Fractional amount of copolymerized component(s) in composition | mol% | 10 | 10 | 10 | 10 | 10 |
| | | Viscosity | dL/g | 0.95 | 0.95 | 0.95 | 0.95 | 0.95 |
| | | Glass transition temperature (Tg) | °C | 73 | 73 | 73 | 73 | 73 |
| | | Melting point (Tm) | °C | 230 | 230 | 230 | 230 | 230 |
| | | Crystallization temperature when heated (Tc) | °C | 158 | 158 | 158 | 158 | 158 |
| | | Tc - (Tg + Tm)/2 | °C | 6.5 | 6.5 | 6.5 | 6.5 | 6.5 |
| | | Crystallization half-time | minutes | 200 | 200 | 200 | 200 | 200 |
| Extrusion cooling | | Melt region temperature | °C | 280 | 280 | 280 | 280 | 280 |
| | | T die temperature | °C | 275 | 275 | 275 | 275 | 275 |
| | | Cooling temperature | °C | 20 | 20 | 20 | 20 | 20 |
| Stretching in machine direction | | Stretching temperature | °C | 105 | 105 | 105 | 105 | 105 |
| | | Stretching ratio | -- | 3.5 | 3.5 | 3.5 | 3.5 | 3.5 |
| | | Heat treatment | °C | None | None | None | None | None |
| | | Stretching temperature - Tg | °C | 32 *3 | 32 *3 | 32 *3 | 32 *3 | 32 *3 |
| | | **Birefringence (ΔNx)** | -- | 0.068 | 0.068 | 0.068 | 0.068 | 0.068 |
| Stretching in transverse direction | | Preheating temperature | °C | 140 | 140 | 140 | 140 | 140 |
| | | Stretching temperature | °C | 150 | 150 | 150 | 150 | 150 |
| | | Stretching ratio | -- | 6 | 6 | 6 | 6 | 6 |
| | | Stretching temperature - Tc | °C | -8 | -8 | -8 | -8 | -8 |
| | | Stretching characteristics | EXCELLENT, GOOD, BAD | EXCELLENT | EXCELLENT | EXCELLENT | EXCELLENT | EXCELLENT |
| Heat setting | | Heat setting temperature | °C | 215 | 215 | 215 | 215 | 215 |
| | | Percent relaxation | % | 7 | 7 | 7 | 7 | 7 |
| | | Heat setting temperature - Tm | °C | -15 | -15 | -15 | -15 | -15 |
| Change in film properties due to heat setting | | Plane orientation coefficient before heat setting | -- | 0.110 | 0.110 | 0.110 | 0.110 | 0.110 |
| | | Plane orientation coefficient after heat setting | -- | 0.131 | 0.131 | 0.131 | 0.131 | 0.131 |
| | | **Change in plane orientation coefficient (ΔP)** | -- | 0.021 | 0.021 | 0.021 | 0.021 | 0.021 |
| | | Density before heat setting | g/cm³ | -- | -- | -- | -- | -- |
| | | Density after heat setting | g/cm³ | -- | -- | -- | -- | -- |
| | | Change in density | g/cm³ | -- | -- | -- | -- | -- |
| Film properties | | Film viscosity | dL/g | 0.8 *5 | 0.8 *5 | 0.8 *5 | 0.8 *5 | 0.8 *5 |
| | | Thermal shrinkage in machine direction at 150°C | % | 2.5 | 2.1 | 1.8 | 2.1 | 1.5 |
| | | Thermal shrinkage in transverse direction at 150°C | % | 1.5 | 1.2 | 1.0 | 1.2 | 1.4 |
| | | Maximum shrinkage stress in machine direction | MPa | 2.0 | 2.1 | 2.1 | 2.4 | 1.3 |
| | | **Impact strength** | **J/12 μm** | 1.0 | 1.0 | 1.0 | 1.0 | 1.0 |
| | | Suitability for printing treatment | EXCELLENT, GOOD, BAD | GOOD | GOOD | GOOD | GOOD | GOOD |
| | | Suitability for undergoing working | EXCELLENT, GOOD, BAD | GOOD | GOOD | GOOD | GOOD | GOOD |

*1 Thermal shrinkage when subjected to heat treatment for 30 minutes at 120°C

*2 Evaluated for situation where heat seal temperature was 125°C

*3 Relationship to substrate composition, properties, and conditions is shown

*4 Melt flow index (210°C; 2.16 kg) used as alternative index of viscosity

*5 Viscosity at substrate side of film

TABLE 3

| | | Reference Example 1-1 | Reference Example 1-2 | Reference Example 1-3 | Reference Example 1-4 | Reference Example 1-5 |
|---|---|---|---|---|---|---|
| Thickness (μm) | Total | 15 | 16 | 18 | 12 | 30 |
| | Substrate layer | 10 | 13 | 15 | 11.9 | 15 |
| | Sealing layer | 5 | 3 | 3 | 0.1 | 15 |
| Container sealing characteristics | | GOOD | GOOD | GOOD | GOOD | GOOD |
| Sealed container hermetic properties | | GOOD | GOOD | GOOD | BAD | GOOD |
| Sealed container recyclability | | FAIR | GOOD | GOOD | GOOD | BAD |

**Claims**

1. A method for producing biaxially stretched polyester film comprising Operation A through Operation D, below, wherein Tc refers to crystallization temperature when heated (° C), Tg refers to glass transition temperature (° C), and Tm refers to melting point (° C);

   Operation A: Operation in which composition comprising polyester resin for which Tc - (Tg + Tm)/2 is not less than -25° C but not greater than 35° C is melt extruded to obtain unstretched polyester resin composition sheet;
   Operation B: Operation in which the unstretched polyester resin composition sheet obtained at Operation A is heated so as to be within the range not less than Tg + 5 (° C) of the polyester resin but not greater than Tg + 40 (° C) of the polyester resin, and this is stretched so that the stretching ratio in the machine direction is within the range not less than 2x but not greater than 6x to obtain uniaxially oriented polyester resin composition film;
   Operation C: Operation in which the uniaxially oriented polyester resin composition film obtained at Operation B is heated so as to be within the range not less than Tc - 46 (° C) of the polyester resin but not greater than Tc + 25 (° C) of the polyester resin, and this is stretched so that the stretching ratio in the transverse direction is within the range not less than 4x but not greater than 8x to obtain biaxially oriented polyester resin composition film;
   Operation D: Operation in which the biaxially oriented polyester resin composition film obtained at Operation C is made to undergo relaxation within the range not less than 3% but not greater than 20% in the transverse direction of the film as it is heated so as to be within the range not less than Tm - 40 (° C) of the polyester resin but not greater than Tm - 5 (° C) of the polyester resin.

2. The method for producing biaxially stretched polyester film according to claim 1, wherein
   Operation A is an operation in which the layer containing composition comprising polyester resin for which Tc - (Tg + Tm)/2 is not less than -25° C but not greater than 35° C, and a layer containing polyester resin composition, are melt coextruded to obtain the unstretched polyester resin composition sheet.

3. The method for producing biaxially stretched polyester film according to claim 1 or 2, wherein the biaxially stretched polyester film satisfies (1) through (3), below, wherein Tg refers to glass transition temperature (° C);

   (1) Maximum value of thermal shrinkage stress in machine direction when at or above Tg (° C) of polyester resin is not less than 0.1 MPa but not greater than 4.0 MPa;
   (2) Thermal shrinkage in machine direction when treated for 30 minutes at 150° C is not less than 0.1% but not greater than 3.0%, measured in accordance with JIS C 2318-1997 5.3.4 (Dimensional Change);
   (3) Impact strength is not less than 0.5 J/12 μm but not greater than 1.0 J/12 μm.

4. A biaxially oriented polyester film satisfying (1) through (3), below, and containing a composition comprising polyester resin for which Tc - (Tg + Tm)/2 is not less than -25° C but not greater than 35° C, wherein
   Tc refers to crystallization temperature when heated (° C), Tg refers to glass transition temperature (° C), and Tm refers to melting point (° C);

   (1) Maximum value of thermal shrinkage stress in machine direction when at or above Tg (° C) of the polyester resin is not less than 0.1 MPa but not greater than 4.0 MPa;
   (2) Thermal shrinkage in machine direction when treated for 30 minutes at 150 °C is not less than 0.1% but not greater than 3.0%, measured in accordance with JIS C 2318-1997 5.3.4 (Dimensional Change);
   (3) Impact strength is not less than 0.5 J/12 μm but not greater than 1.0 J/12 μm.

5. The biaxially oriented polyester film according to claim 4, wherein the biaxially oriented polyester film comprises the layer containing a composition comprising polyester resin for which Tc - (Tg + Tm)/2 is not less than -25° C but not greater than 35° C, and a layer containing polyester resin composition.

**Patentansprüche**

1. Ein Verfahren zur Herstellung von biaxial gereckter Polyesterfolie, umfassend den nachstehenden Schritt A bis Schritt D, wobei

Tc die Kristallisationstemperatur bei Erwärmung (°C) bezeichnet, Tg die Glasübergangstemperatur (°C) bezeichnet und Tm den Schmelzpunkt (°C) bezeichnet;
Schritt A: Schritt, bei dem eine Zusammensetzung, die Polyesterharz umfasst, für das Tc - (Tg + Tm)/2 nicht weniger als -25°C, jedoch nicht mehr als 35°C beträgt, schmelzextrudiert wird, um ein ungerecktes Bahnenmaterial einer Polyesterharzzusammensetzung zu erhalten;
Schritt B: Schritt, bei dem das in Schritt A erhaltene ungereckte Bahnenmaterial einer Polyesterharzzusammensetzung so erwärmt wird, dass es im Bereich von nicht weniger als Tg + 5 (°C) des Polyesterharzes, jedoch nicht mehr als Tg + 40 (°C) des Polyesterharzes liegt, und dieses so gereckt wird, dass das Reckverhältnis in der Maschinenrichtung im Bereich von nicht weniger als 2x, jedoch nicht mehr als 6x liegt, um eine uniaxial orientierte Folie einer Polyesterharzzusammensetzung zu erhalten;
Schritt C: Schritt, bei dem die in Schritt B erhaltene uniaxial orientierte Folie einer Polyesterharzzusammensetzung so erwärmt wird, dass sie im Bereich von nicht weniger als Tc - 46 (°C) des Polyesterharzes, jedoch nicht mehr als Tc + 25 (°C) des Polyesterharzes liegt, und diese so gereckt wird, dass das Reckverhältnis in der Querrichtung im Bereich von nicht weniger als 4x jedoch nicht mehr als 8x liegt, um eine biaxial orientierte Folie einer Polyesterharzzusammensetzung zu erhalten;
Schritt D: Schritt, bei dem die in Schritt C erhaltene biaxial orientierte Folie einer Polyesterharzzusammensetzung einer Relaxation im Bereich von nicht weniger als 3%, jedoch nicht mehr als 20% in der Querrichtung der Folie unterzogen wird, während sie auf eine Temperatur im Bereich von nicht weniger als Tm - 40 (°C) des Polyesterharzes, jedoch nicht mehr als Tm - 5 (°C) des Polyesterharzes erwärmt wird.

2. Das Verfahren zur Herstellung von biaxial gereckter Polyesterfolie nach Anspruch 1, wobei
Schritt A ein Schritt ist, bei dem die Schicht, die eine Zusammensetzung enthält, die Polyesterharz umfasst, für das Tc - (Tg + Tm)/2 nicht weniger als -25°C, jedoch nicht mehr als 35°C beträgt, und eine Schicht, die eine Polyesterharzzusammensetzung enthält, schmelzcoextrudiert werden, um das ungereckte Bahnenmaterial einer Polyesterharzzusammensetzung zu erhalten.

3. Das Verfahren zur Herstellung von biaxial gereckter Polyesterfolie gemäß Anspruch 1 oder 2, wobei die biaxial gereckte Polyesterfolie nachstehende (1) bis (3) erfüllt, wobei Tg die Glasübergangstemperatur (°C) bezeichnet:

(1) der Maximalwert der thermischen Schrumpfspannung in Maschinenrichtung bei oder über Tg (°C) des Polyesterharzes beträgt nicht weniger als 0,1 MPa, jedoch nicht mehr als 4,0 MPa;
(2) die thermische Schrumpfung in Maschinenrichtung bei 30-minütiger Behandlung bei 150°C beträgt nicht weniger als 0,1%, jedoch nicht mehr als 3,0%, gemessen gemäß JIS C 2318-1997 5.3.4 (Maßänderung);
(3) die Schlagzähigkeit beträgt nicht weniger als 0,5 J/12 $\mu$m, jedoch nicht mehr als 1,0 J/12 $\mu$m.

4. Eine biaxial orientierte Polyesterfolie, welche nachstehende (1) bis (3) erfüllt und eine Zusammensetzung enthält, die Polyesterharz umfasst, für das Tc - (Tg + Tm)/2 nicht weniger als -25°C, jedoch nicht mehr als 35°C beträgt, wobei Tc die Kristallisationstemperatur bei Erwärmung (°C), Tg die Glasübergangstemperatur (°C) und Tm den Schmelzpunkt (°C) bezeichnet;

(1) der Maximalwert der thermischen Schrumpfspannung in Maschinenrichtung bei oder über Tg (°C) des Polyesterharzes beträgt nicht weniger als 0,1 MPa, jedoch nicht mehr als 4,0 MPa;
(2) die thermische Schrumpfung in Maschinenrichtung bei 30-minütiger Behandlung bei 150°C beträgt nicht weniger als 0,1%, jedoch nicht mehr als 3,0%, gemessen gemäß JIS C 2318-1997 5.3.4 (Maßänderung);
(3) die Schlagzähigkeit beträgt nicht weniger als 0,5 J/12 $\mu$m, jedoch nicht mehr als 1,0J/12 $\mu$m.

5. Die biaxial orientierte Polyesterfolie nach Anspruch 4, wobei die biaxial orientierte Polyesterfolie die Schicht, die eine Zusammensetzung enthält, die Polyesterharz umfasst, für das Tc - (Tg + Tm)/2 nicht weniger als -25°C, jedoch nicht mehr als 35°C beträgt, und eine Schicht, die eine Polyesterharzzusammensetzung enthält, umfasst.

**Revendications**

1. Méthode pour produire un film de polyester à étirement biaxial comprenant les opérations A à D ci-dessous, dans laquelle

   Tc se réfère à la température de cristallisation lors d'un chauffage (en °C), Tg se réfère à la température de transition vitreuse (en °C), et Tm se réfère au point de fusion (en °C) ;
   opération A : opération dans laquelle une composition comprenant une résine de polyester pour laquelle la valeur de Tc - (Tg + Tm) / 2 n'est pas inférieure à -25 °C mais pas supérieure à 35 °C est extrudée à l'état fondu pour que soit obtenue une feuille de composition de résine de polyester non étirée ;
   opération B : opération dans laquelle la feuille de composition de résine de polyester non étirée obtenue lors de l'opération A est chauffée de façon à être située dans la plage allant d'au moins la Tg + 5 (°C) de la résine de polyester à au plus la Tg + 40 (°C) de la résine de polyester, et est étirée de façon que le rapport d'étirage dans le sens machine soit situé dans la plage allant d'au moins 2x à au plus 6x pour que soit obtenu un film de composition de résine de polyester à orientation uniaxiale ;
   opération C : opération dans laquelle le film de composition de résine de polyester à orientation uniaxiale obtenu lors de l'opération B est chauffé de façon à être situé dans la plage allant d'au moins la Tc - 46 (°C) de la résine de polyester à au plus la Tc + 25 (°C) de la résine de polyester, et est étiré de façon que le rapport d'étirage dans le sens travers soit situé dans la plage allant d'au moins 4x à au plus 8x pour que soit obtenu un film de composition de résine de polyester à orientation biaxiale ;
   opération D : opération dans laquelle le film de composition de résine de polyester à orientation biaxiale obtenu lors de l'opération C est amené à subir une relaxation dans la plage allant d'au moins 3 % à au plus 20 % dans le sens travers du film lorsqu'il est chauffé de façon à être situé dans la plage allant d'au moins la Tm - 40 (°C) de la résine de polyester à au plus la Tm - 5 (°C) de la résine de polyester.

2. Méthode pour produire un film de polyester à étirement biaxial selon la revendication 1, dans laquelle l'opération A est une opération dans laquelle la couche contenant la composition comprenant la résine de polyester pour laquelle la valeur de Tc - (Tg + Tm) / 2 n'est pas inférieure à -25 °C mais pas supérieure à 35 °C et une couche contenant une composition de résine de polyester sont coextrudées à l'état fondu pour que soit obtenue la feuille de composition de résine de polyester non étirée.

3. Méthode pour produire un film de polyester à étirement biaxial selon la revendication 1 ou 2, dans laquelle le film de polyester à étirement biaxial satisfait à (1) à (3) ci-dessous, dans laquelle Tg se réfère à la température de transition vitreuse (°C) ;

   (1) la valeur maximale de la contrainte de retrait thermique dans le sens machine lorsque la résine polyester est à ou au-dessus de la Tg (°C) de la résine de polyester n'est pas inférieure à 0,1 MPa mais pas supérieure à 4,0 MPa ;
   (2) le retrait thermique dans le sens machine lors d'un traitement pendant 30 minutes à 150 °C n'est pas inférieur à 0,1 % mais pas supérieur à 3,0 %, mesuré conformément à la norme JIS C 2318-1997 5.3.4 (changement dimensionnel) ;
   (3) la résistance au choc n'est pas inférieure à 0,5 J/12 $\mu$m mais pas supérieure à 1,0 J/12 $\mu$m.

4. Film de polyester à orientation biaxiale satisfaisant à (1) à (3) ci-dessous, et contenant une composition comprenant une résine de polyester pour laquelle la valeur de Tc - (Tg + Tm) / 2 n'est pas inférieure à -25 °C mais pas supérieure à 35 °C, dans lequel
   Tc se réfère à la température de cristallisation lors d'un chauffage (en °C), Tg se réfère à la température de transition vitreuse (en °C), et Tm se réfère au point de fusion (en °C) ;

   (1) la valeur maximale de la contrainte de retrait thermique dans le sens machine lorsque la résine polyester est à ou au-dessus de la Tg (°C) de la résine de polyester n'est pas inférieure à 0,1 MPa mais pas supérieure à 4,0 MPa ;
   (2) le retrait thermique dans le sens machine lors d'un traitement pendant 30 minutes à 150 °C n'est pas inférieur à 0,1 % mais pas supérieur à 3,0 %, mesuré conformément à la norme JIS C 2318-1997 5.3.4 (changement dimensionnel) ;

(3) la résistance au choc n'est pas inférieure à 0,5 J/12 $\mu$m mais pas supérieure à 1,0 J/12 $\mu$m.

5. Film de polyester à orientation biaxiale selon la revendication 4, lequel film de polyester à orientation biaxiale comprend la couche contenant la composition comprenant la résine de polyester pour laquelle la valeur de Tc - (Tg + Tm) / 2 n'est pas inférieure à -25 °C mais pas supérieure à 35 °C et une couche contenant une composition de résine de polyester.

**REFERENCES CITED IN THE DESCRIPTION**

**Patent documents cited in the description**

- JP 2017074750 A

- DE 2443928 A1

**Non-patent literature cited in the description**

- Testing Methods for Transition Temperatures of Plastics. *JIS K 7121-2012*